# EUROPEAN PATENT APPLICATION

(11) **EP 1 450 277 A2**
(43) Date of publication of application: **25.08.2004**
(21) Application number: 04250879.6
(22) Date of filing: 18.02.2004
(51) Int. Cl.: G06F 17/30

(54) **Image streaming**

(30) Priority: 19.02.2003 GB 0303888
(71) Applicant: The Secretary of State acting through Ordnance Survey, Maybush, Southampton SO16 4GU (GB)
(72) Inventor: Radburn, Andrew John, Southampton Hampshire SO16 4GU (GB); Bryant, Jonathan Mark, Southampton Hampshire SO16 4GU (GB)
(74) Representative: Harris, Ian Richard

(57) **Abstract**

A portion of an image field (e.g., a map) to be displayed on a display at a client device (e.g., a thin client such as a mobile phone) is downloaded on request from a server as a plurality of image tiles representing respective portions of the image field. A first image tile represents a portion at the centre of the image to be displayed on the display and further image tiles represent portions surrounding the first tile. The total area of the image tiles exceeds the area of the display. Each tile is displayed as it becomes available. Additional tiles image can be requested automatically from the server in response to a user navigating to the edge of the displayed image.

## Description

### BACKGROUND OF THE INVENTION

The invention relates to providing image data from a server to a client device.

There is an increasing demand for image data to be transmitted from a server to a client device. It has been commonplace for many years to transmit static and moving images from a server computer to a client computer via a network such as the Internet, or an intranet. More recently, it has also become possible to transmit images from a server computer to a hand held device such as a mobile telephone. The images that are transmitted in this case are sized and at a resolution to fit within the screen of the mobile telephone. The bandwidth available on mobile telephones for downloading images is currently much less than that available for computer networks, and accordingly, the time taken to download an image to a mobile telephone is longer than that for downloading an image of equivalent size and resolution to a computer. Downloading images can also be expensive, as current charging regimes are based on the number of bytes downloaded.

It is also known to transmit extracts of maps from a server computer to a client computer via a network such as the Internet, or an intranet. Typically, a user at a client station can select a portion of a map to be accessed and then the selected portion is downloaded from the server to the user's client computer. However, if the portion initially selected by the user is incorrect, or the user wishes to view an adjacent portion of the map, it is necessary to repeat the process of downloading an image. If such a technique were to be applied to a mobile telephone, with the small image size, and the long download time, it will be appreciated that the process of identifying a required portion of a map can be a long and expensive process. Also, navigating around a map would be a long, tedious and expensive process.

Accordingly, the invention seeks to provide a more efficient and flexible way of downloading images such as maps that is suitable for use with a mobile telephone.

### SUMMARY OF THE INVENTION

An aspect of the invention provides a method of displaying part of an image field on a display at a client device, the method comprising the client device: responding to user selection at the client device of a location within the image field to request from a server over a network, a plurality of image tiles including a first image tile that represents a portion of the image field including the selected location and a plurality of further image tiles represent portions of the image field surrounding the portion of the image field represented by the first tile; receiving from the server via the network, the plurality of requested image tiles; and displaying at least a part of the first image tile and the further image tiles on the display, wherein a total area of the first and further image tiles exceeds the area of the display.

Supplying the image data in tiles enables rapid download of at least a portion of the image to be displayed with additional portions of the image field being subsequently downloaded. This can provide the user with at least a portion of the image of interest in a rapid manner without having to wait for the whole image to be downloaded. This is of particular interest where the image portions are transmitted in a compressed form, as each tile can be processed for compression and decompression separately.

By automatically providing tiles that cover an area larger than the available display area, image data for the portion of an image field immediately surrounding the displayed area can be held in the client device for access by the user without requiring a separate downloading step. The tiling approach means that at least one tile can be displayed as further tiles are downloaded to complete the portion of an image field immediately surrounding the displayed area. In this way the user is provided with image data in at least a part of the display while the download is completed.

The invention finds particular, but not exclusive, application where a relatively low bandwidth for the transfer of image data between the server and the client device is available, and/or where the client device has limited display, memory and/or processing capacity. An example of such an application is where the client device is a so-called thin client such as a mobile telephone or a personal data assistant (PDA).

In one example each image tile can be requested and received individually by the client device, that is each request relates to a single image tile. The client device may indicate to the server the identity of the tile to be downloaded. This can enable the efficient transfer of image tiles. The client device is operable to compute the identity of and request the required tiles. The image data may be generated from vector information. The client device may then be operable to determine the vector information needed to generate image tiles and may request the appropriate vector information from the server.

In another example, the client device can identify the location within the image field to the server and in response thereto the client device receives from the server the first and further tiles.

Advantageously, each tile is displayed as it becomes available. If the first image tile is received first, then this enables the central area of the display to be displayed before the peripheral areas. In one example, area of the first image tile is less than the area of the display, so that the central area of the display is occupied by the first image tile. Eight further image tiles can be arranged to surround the first image tile to complete the display area. In an example of the invention, the eight further image tiles extend beyond the edge of the display such that the first image tile and the eight further image tiles together provide a total area that exceeds the area of the display.

One option to further reduce the initial download time, would be for at least selected image tiles to be received initially in lower detail, and then to be updated in higher detail.

Subsequently to the receipt of the first image tile and the plurality of further image tiles, additional image tiles could be received representing portions surrounding the first and plurality of further tiles. The additional image tiles can be received as a background task that is transparent to the user. These additional image tiles might also be received, at least initially, in low detail, whereby the additional image tiles could be made available at the client device for use if required at low cost in terms of bandwidth and storage requirements.

In response to user input at the client device requesting navigation in a selected direction with respect to the displayed image, the client device can be operable to request from the server, additional image tiles in the selected direction with respect to the currently displayed image tiles or image tile portions. If the additional images are already available, then these could be displayed in low resolution and the higher resolution images could be requested from the server.

To aid navigation, the user device can be operable to display a pointer, cursor, or the like, on the display and can include a navigation input control (e.g., a pointing device such as a joystick control) for controlling the position of the pointer. The client device can be arranged, for example, to respond to the cursor reaching a boundary zone of the display as a request for navigation in a direction represented by that boundary zone.

The image tiles can be transmitted from the server to the client device in a compressed form. The client device is operable to cache received image tiles in memory in the client device. A primary cache can be used to hold decompressed image tiles for display and a secondary cache can be used to hold compressed image tile data that have been received from the server but has not be decompressed for display. Where cache capacity constraints dictate that a cached image tile has to be discarded to make way for a newly received image tile, the image tile representative of an image portion furthest from the currently displayed image tile can be discarded, or purged.

In an example of the invention, the image field is a map, and the image tiles are representative of respective portions of the map. The map can be defined in at least a first predefined scale, and the image tiles can be derived from the map at a selected scale. The selected scale can be selectable by the user at the client device.

In one example, subsequently to receiving the first and further image tiles at a selected scale, a set of one or more image tiles can be received at a different scale, with the set of one or more image tiles at a different scale being cached in the client device. For example, a larger and/or smaller scale representation of the map could be downloaded as a background task so that the user could rapidly be provided with a larger and/or smaller scale map on demand.

Information relating to objects represented by parts of the image tiles can be associated with the image tiles so that in response to user selection of an object on the display, for example by a point and click operation using a pointing device, the information relating to the object can be supplied to the user. Supplying the information can involve providing information that was cached with the image tile at the client device. Alternatively, or in addition, supplying the information can involve requesting the information from the server via the network.

Another aspect of the invention provides a method of supplying a portion of an image field to a display at a client device, the method comprising a server: receiving one or more requests from a client device via a network; and in response thereto supplying a plurality of image tiles representative of respective portions of the image field and including a first image tile representing a portion at the center of the image to be displayed on the display and a plurality of further image tiles representing portions surrounding the first image tile, whereby the total area of the image tiles exceeds the area of the display at the client device.

A further aspect of the invention provides a computer program comprising program instructions operable to cause a client device to perform the steps of a method of displaying a portion of an image field on a display at a client device. Another aspect of the invention provides a computer program comprising program instructions operable to cause a server to perform the steps of a method of supplying a portion of an image field to a client device. In each case, the computer program can be provided on a carrier medium.

A further aspect of the invention provides a client device comprising a processor, memory, a communication interface and a display, the client device being operable: to respond to user selection at the client device of a location within the image field to request from a server over a network, a plurality of image tiles including a first image tile that represents a portion of the image field including the selected location and a plurality of further image tiles represent portions of the image field surrounding the portion of the image field represented by the first tile; to receive from the server via the network, the plurality of requested image tiles; and to display at least a part of the first image tile and the further image tiles on the display, wherein a total area of the first and further image tiles exceeds the area of the display. The client device can be programmed by a computer program comprising program instructions operable to cause the client device to perform the steps of the method described above of displaying a portion of an image field on a display at a client device

Another aspect of the invention provides a server comprising a processor, memory and a communications interface, the server being operable to receive one or more requests from a client device via a network; and in response thereto to supply a plurality of image tiles representative of respective portions of the image field and including a first image tile representing a portion at the centre of the image to be displayed on the display and a plurality of further image tiles representing portions surrounding the first image tile, whereby the total area of the image tiles exceeds the area of the display at the client device. The server can be programmed by a computer program comprising program instructions operable to cause the server to perform the steps of the method described above of supplying a portion of an image field to a client device.

Further aspects and advantages of the invention will become apparent from the following description of particular embodiments.

### BRIEF DESCRIPTION OF THE DRAWINGS

Embodiments of the present invention will be described hereinafter, by way of example only, with reference to the accompanying drawings in which like reference signs relate to like elements and in which:
Figure 1 is an overview of a network in accordance with a present invention with at least one client device operable to display a portion of an image field on a display at the client device and at least one server operable to supply a portion of an image field to the client device;
Figure 2 is a representation of such a client device in the form a mobile telephone configured to display a portion of an image field on a display;
Figure 3 is a functional block diagram of parts of the client device of Figure 2;
Figure 4 is a schematic representation of software components for controlling the operation of the client device of Figure 3;
Figure 5 is a functional block diagram of parts of a server;
Figure 6 is a schematic representation of a plurality of image tiles forming a portion of an image field;
Figure 7 illustrates an example of scrolling image tiles on the client device;
Figure 8 is a flow diagram summarising the operation of an example of a mapping application on the client device of Figure 3;
Figure 9 is a flow diagram of a user interface task of the mapping application of Figure 8;
Figure 10 is a flow diagram of a gazetteer processing task of the mapping application of Figure 8;
Figure 11 is a flow diagram of a favourite processing task of the mapping application of Figure 8;
Figure 12 is a user profile processing task of the mapping application of Figure 8;
Figure 13 is a flow diagram of a map display drawing task of the mapping application of Figure 8;
Figure 14 is a flow diagram of a cursor movement task of the mapping application of Figure 8;
Figure 15 is a flow diagram giving an overview of a map builder task of the mapping application of Figure 8;
Figure 16 is a flow diagram of a task for generating a list of map tiles forming part of the map builder task of Figure 15;
Figure 17 is a flow diagram of a task for getting a tile from a map image manager for the task of Figure 16;
Figure 18 is a flow diagram of an HTTP requestor task of the mapping application of Figure 8;
Figure 19 is a flow diagram of a task for storing an image in a primary cache for the mapping application of Figure 8;
Figure 20 is a flow diagram of a task for storing in a secondary cache for the mapping application of Figure 8;
Figure 21 is a flow diagram of a task for zooming in for the mapping application of Figure 18;
Figure 22 is a flow diagram of a task for zooming out for the mapping application of Figure 8;
Figure 23 is a flow diagram of a task for updating favourites;
Figure 24 is a flow diagram part of an example of a mapping application for a point and click operation on the client device;
Figure 25 is a flow diagram of a server gazetteer function;
Figure 26 is a flow diagram of a server tile process;
Figure 27 is a schematic representation of a data structure for holding a vector data for forming image tiles;
Figure 28 is a schematic representation of displayed image tiles comprising vector data; and
Figures 29A to 29G illustrate successive stages in displaying vector data for an array of nine tiles.

While the invention is susceptible to various modifications and alternative forms, specific embodiments are shown by way of example in the drawings and are herein described in detail. It should be understood, however, that drawings and detailed description thereto are not intended to limit the invention to the particular form disclosed, but on the contrary, the invention is to cover all modifications, equivalents and alternatives falling within the scope of the claimed invention.

### DESCRIPTION OF PARTICULAR EMBODIMENTS

Embodiments and examples are described hereafter by way of example only in the following with reference to the accompanying drawings.

An embodiment of the invention will be described in which access to map information is provided over a network, providing the user with a possibility of selecting a particular area of a map to be viewed, and to navigate around that map, while viewing the map in real time.

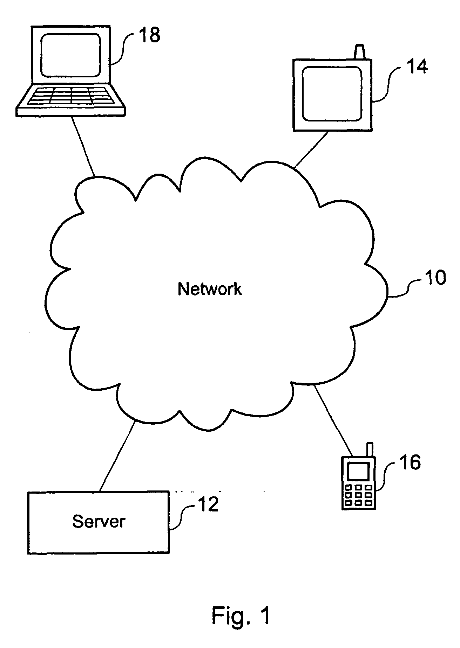

Figure 1 represents a schematic overview of a network including a server 12 and a plurality of client devices connected to the network. The client devices shown include a personal data assistant (PDA 14), a mobile phone 16 and a computer 18. In the particular example to be described, it is assumed that the network 10 is a radio telephony network (e.g., a mobile or cellular telephone network), and that each of the devices shown include a transmitter/receiver connectable to the mobile telephone network. It is, however, to be understood that other forms of network such as the Internet, an intranet, or other wired or wireless network could be employed with the server and the devices being provided with appropriate communication interfaces to the network 10.

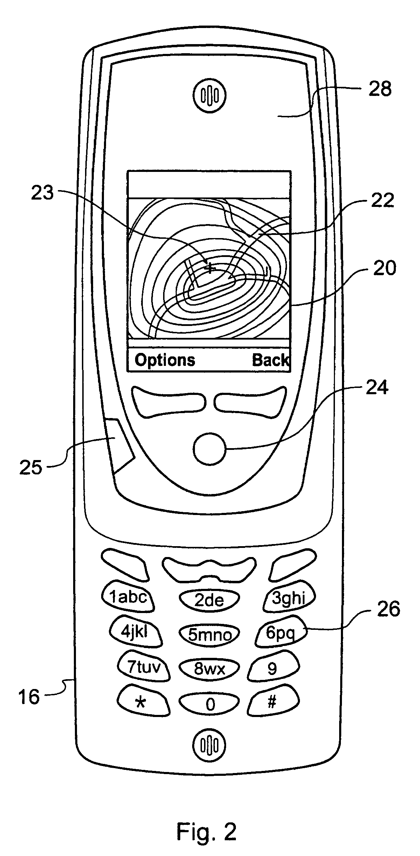

Figure 2 is an illustrative representation of a client device in the form of a mobile, or cellular, telephone of the type described as a "smart phone", that is a mobile, or cellular, telephone that is programmable to provide enhanced functionality beyond basic telephonic functions. As illustrated in Figure 2, the mobile telephone 16 includes a display 20, which in the example illustrated in Figure 2 is displaying a portion 22 of a map and a cursor 23. The mobile telephone 16 also includes input devices in the form of a pointing device 24 (e.g. a joystick) and a keyboard 26. The mobile telephone 16 also includes an aerial 28, in the present instance enclosed within the housing 25 of the mobile telephone 16.

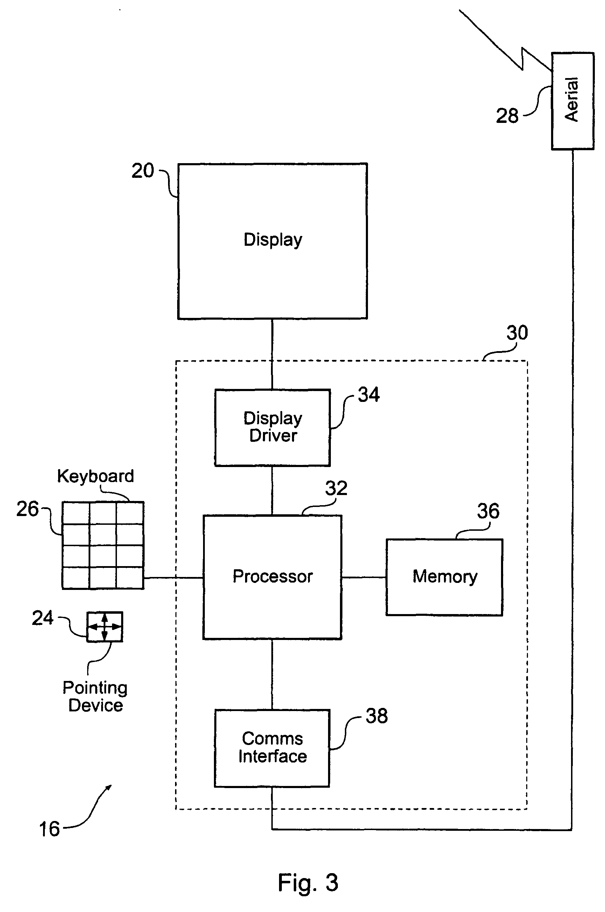

Figure 3 provides a schematic overview of functional components of an example of a client device in the form of a mobile telephone such as the smart phone represented in Figure 2. As shown in Figure 3, these functional components include the display 20, the pointing the device 24, the keyboard 26 and the aerial 28 already mentioned. They also include a processor 32 which co-operates with a display driver 34 for controlling the display 20, a memory 36 for storing program information and data, and a communication interface 38 for interfacing with the aerial 28. The processor 32, display driver 34, memory 36 and communications interface 38 can be provided by one or more integrated circuits represented generally at 30.

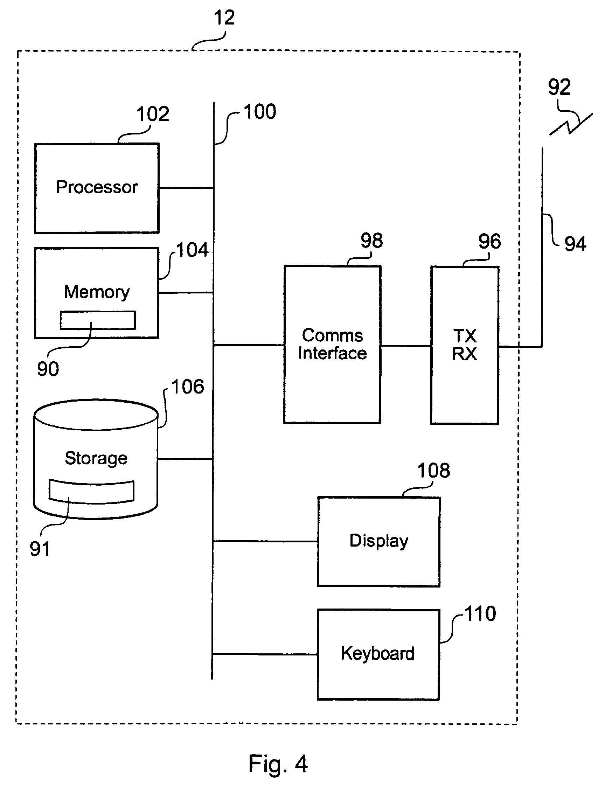

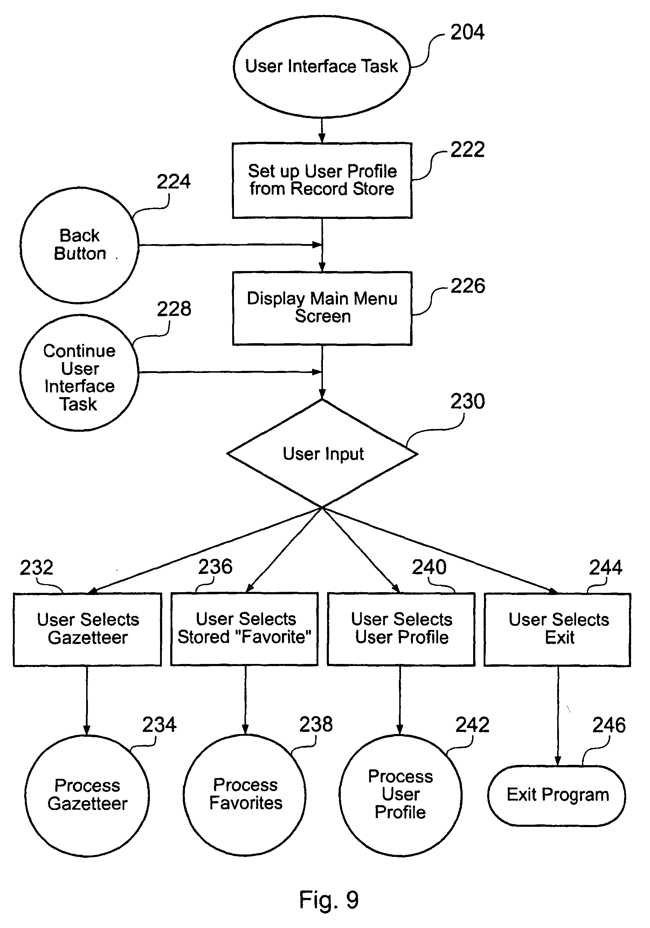

Figure 4 it is schematic representation of typical components of a server 12. As shown in Figure 9 the server includes a processor 102, a memory 104, storage 106, a communications interface 98 and a transmitter/receiver 96 connectable to the network, for example by means of a wireless link 92 using an aerial 94. The processor 102, the memory 104, the storage 106 and the communications interface 98 can be connectable by a bus system or the like, 100. Optionally, the server may also be configurable on site by means of a display 108 and user input devices such as a keyboard and/or pointing device 110. Alternatively, it could be controlled remotely, for example over the Internet.

As mentioned above, the present example of a client device can be one of the so-called smart phones that are programmable to provide enhanced functionality beyond simple telephone functions. Examples of such so-called smart phones are available from most mobile telephone manufacturers, for example the Nokia 7650 phone and the Ericsson P800, currently on the market. Such smart phones can be configured to operate under any one of a number of mobile telephone standards. A smart phone includes a graphical use interface and a suite of applications built around a core operating system, for example the Symbian operating system. Software development kits are provided for creating applications, in, for example, the Java™ or C++ languages.

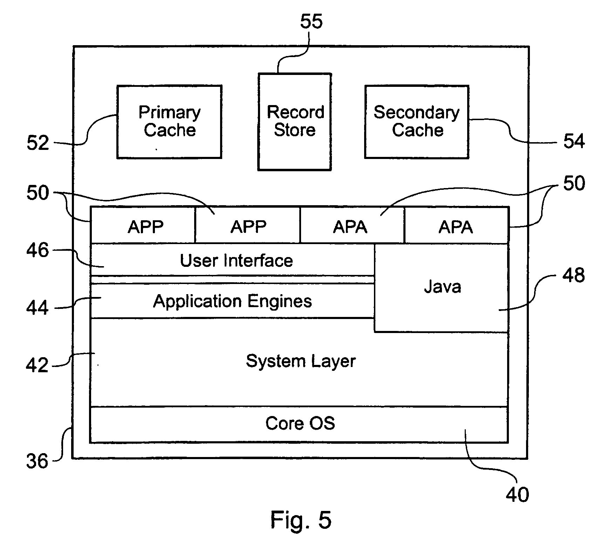

Figure 5 is a schematic representation of software components that can be held in the memory 36 the smart phone and can be operable to control the functioning of the smart phone. As illustrated in Figure 5, the software can include a core operating system 40, for example based on the Symbian operating system. A system layer 42 provides extensions to the core operating system and provides an interface to application engines 44 and to a Java virtual machine 48. A user interface 46 co-operates with the Java and the application engines to enable one or more specific user applications 50 to operate in the smart phone to control the operation of the smart phone in accordance with a customer's requirements. Also illustrated in Figure 5 are a primary cache 52 and a secondary cache 54. Image tiles that are currently visible on the map display can be held in decompressed format in the primary cache 52. Image tiles that have been received from the server 12 but are not currently being displayed can be held in compressed format in the secondary cache 54. A record store 55 is also shown for storing operating parameters of a mapping application as will be described later.

The Symbian operating system 40 is a multi-tasking operating system where applications are designed to interact with one another. For example, if a phone call interrupts a user composing an email message, the user can switch from email to a calendar application in the middle of a telephone conversation, or an incoming short messaging service (SMS) message may trigger the user to access a contact database within the system and to forward the SMS message on.

The user interface 46 is based on the fact that a smart phone is intended as a hand-held mobile telephone, but is also operable to provide diverse applications and data communication. The user interface design will typically be structured to provide browsing elements and detailed views.

In a mobile telephone environment, a relatively small display is provided. In one example, the display may have a size of 176 x 208 pixels. Accordingly, it will be appreciated that a relatively small amount of information can be displayed on the viewable display at any one time. As mentioned earlier, a numeric keyboard is provided. This can include, for example, a 12-key numeric keyboard with function keys. Also, a pointing device, for example a joystick, a toggle button or a group of buttons can be provided.

A mapping application can be configured to enable the display of a cursor on the display screen, and for the cursor to be manipulated using the pointing device. The pointing device can be configured such that it can be operated in "point and click" mode, whereby toggling the pointing device enables navigation by moving the cursor and firmly pressing the pointing device enables "clicking" on a location currently identified by the cursor. The use of such functions is well known in the computer arts, and is also known in smart phones that are already on the market.

A mobile telephone such as a smart phone is able to upload and download information via the mobile telephone network through the communications interface 38 and the aerial 28. It is also possible for programming to be affected through other connections, for example physical connections or using the Bluetooth ^{TM} standard, by way of example only.

The generation of user applications can readily be achieved using C++ or Java, for example. In particular, Java has become popular as a programming language and as a run-time environment over a wide range of platforms, and more recently in the field of mobile telephony. Programming such mobile telephones in the Java language is well understood in one skilled in the art. Indeed, program developer tool kits are available from, for example, the mobile telephone manufacturers.

In the following, there is described an example of a mapping application implemented on a mobile telephone 16 as described with reference to Figures 2, 3 and 5. A particular implementation of this mapping application is written for the Java2 Micro Edition platform (J2ME). It provides map searching and browsing on a smart phone, with data being delivered wirelessly via the Internet from server applications compliant with Open GIS Consortium (OGC) standard specifications.

An example of the mapping application can be operable on a client device such as a mobile telephone to cause a Web Gazetteer Server to look up a user-entered location or place name and to obtain the relevant map co-ordinates. The map co-ordinates (e.g., x:y co-ordinates) can then be used to select and download to the client device an appropriate portion of a map, which can then be displayed within a display window on the client device (e.g., the display of a mobile telephone). The user can scroll up, down, left and right by the use of a pointing device (e.g., the pointing device 24 on a mobile phone 16). Additional mapping information can be retrieved from the server when needed, and can be intelligently cached at the client device to enable fast redrawing of the display. Map scrolling can be provided in a smooth manner with further portions of the map being retrieved as a background process.

An example of an implementation of the mapping application can be written using Sun Microsystems, Inc Forte Java Development environment (Forte for Java 4.0 ME), which has a built-in simple colour J2ME phone emulator. This approach enables an application to be tested extensively and subsequently to be transferred to a real environment for further testing. Emulators are also to be provided by the mobile phone manufacturers for enabling accurate emulation. As mentioned above, one example of the present invention is designed for a client device in the form of a mobile telephone of the type described as a smart phone. Examples of such smart phones currently on the market are the Nokia 7650 and the Ericsson P800 mobile telephones, although it will be appreciated that other mobile telephones could be used, and also that the present invention is applicable to future generations of mobile telephones and indeed to other networked client devices as described in the introduction.

An example of a graphical user interface (GUI) of the mapping application can provide a number screen views to a user to enable interaction with the mapping application.

A main menu can provide a menu of selectable options, including, for example: a Go To option, a Favourites option and a User Profile option. Selecting one of these options (e.g. using a point and click operation with the pointing device on the client device) will take the user to the appropriate screen.

A Go To screen view, which is accessible by selecting the Go To option on the main screen, can include a text input field where a user can type a place name to be searched for. The user can, for example use a "wild card" character when entering a place name to avoid typing a complete name. In response to the input of an abbreviated name, a series of options can be provided and displayed on a Go To Results screen view (see below) for the user to make a particular selection. As an alternative to inputting a name to be searched for, the GoTo screen view can be configured to accept another location identifier such as a map reference, grid co-ordinates a post or zip code, etc.

A Favourites screen view, which is accessible by selecting the Favourites option on the main screen, can be used to display one of a set of favourites previously defined using an Add To Favourites screen view as described below.

A User Preferences screen view, which is accessible by selecting the User Profile option on the main screen, can be used to input and save user preferences, such as a user name, a password, URLs, addresses, a number of tiles for primary and secondary caches, and other functions. The user can be provided with the option of saving a profile, restoring a profile to default settings and clearing a map store, for example.

As mentioned above, a Go To Results screen view can be used to display a list of results from a Gazetteer search. The user can then select one of the results in the list and a map can be drawn in a currently selected map scale with a selected point at the centre of the map.

A Map Screen view displays a portion of a map retrieved from a Web Map Server. The portion of the map to be displayed is supplied from the Web Map Server in tiles, and is displayed using those tiles, with successive tile downloads completing more of the map image. The tiles are cached in the mobile telephone as they are received. Relatively small tile sizes are typically preferred to take account of the relatively low capacity of a client device such as a mobile telephone for processing map tiles. In one example, tiles of 100 pixels square in the compressed Portable Network Graphics (PNG) format are used. As mentioned above, the user can freely scroll in all directions using the pointing device on the mobile phone with the mapping application being configured automatically to request the download of additional map tiles to supplement those already stored in the mobile in accordance with the scrolling operation of the user.

The user can also be provided with the option of changing the scale of the map, for example by pressing the number 1 on the mobile phone key pad to zoom out and the number 3 to zoom in. It will be appreciated that, in another example, any other of the available input keys or devices on the mobile telephone could be configured to initiate zooming. In response to a zooming operation, the extent of the map available within the display window is altered, with the source data being switched between various layers of mapping information. For example, maps could be provided at 1:1,000,000, 1:250,000 raster and 1:50,000 raster. In one example, the mapping application is configured to initiate displaying in the 1:50,000 raster, the closest zoom setting in the present example. These layer settings could of course be changed for different examples, and any number of one or more layers could be provided as required.

Ideally, the source data for the mapping information is processed to include a limited number of colours to provide smaller file sizes when downloading the tiles.

A user can bookmark a selected map location in the list of favourites, by selecting an Add To Favourites option.

In particular, the mapping application can be configured to respond to user input (e.g., as a result of a point and click operation at a current cursor position) to cause a current location to be added to the list of favourites. An Add To Favourites screen view can be provided in which the user can enter text describing the current location, such as "work" or "home". As the user may have scrolled a fair distance from a previously searchable place, the user can enter a new place name to identify the current cursor point for each favourite saved. When the Favourites option is selected from the main menu, the user can jump to one of the previously stored map positions, with any map not currently stored being retrieved from the map server on the network.

When the user has finished using the application, the mapping application can be arranged to store the last displayed screen maps in the memory 36 on the mobile telephone to enable further viewing later without additional access to the network.

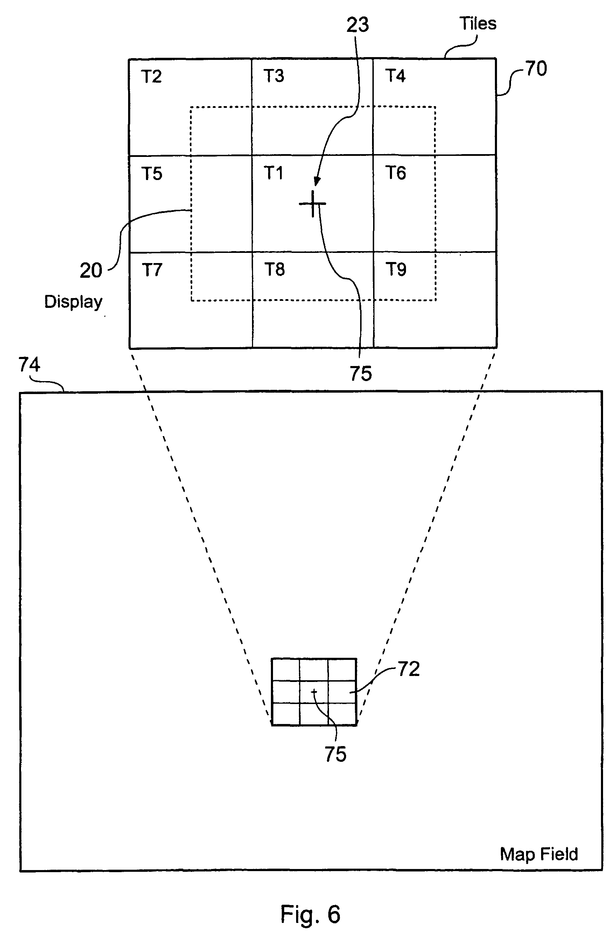

Access to information on the Internet from client devices such as mobile telephones is inevitably constrained by the available speed of download, and the relatively low processing power of such mobile telephones. The present example of the mapping application is designed to enhance usability by downloading a greater area of mapping that can be viewed at once on the screen. This is illustrated in Figure 6. This means that after an initial wait for the first image, the surrounding images can also be downloaded in the background. Thus, when the user is ready to scroll to see an adjoining mapping on the "next screen", the data can already be provided in the mobile telephone, whereby scrolling can be seamless in all directions until the user has reached the edge of the total area of the original download. By phasing the downloading in this way, the user experience of using mapping on a mobile telephone can be optimised.

In one example of the present invention, as illustrated in Figure 6, it is assumed that the user has selected a point 75 in a map field 74, which can, for example, be data representing the map of a complete country. In response to selecting the particular point within the map field, (for example as a result of a process of introducing a name on the Go To screen view and then selecting a location from a Go To Results screen view described earlier), the mapping application can, in a series of requests messages to the map server, via the telephone network, request the download of a series of map tiles. The map server can then be operable to download the selected map tiles.

In the current example, in response to identifying the point 75, mapping application sends a series of requests to the map server to download nine tiles of map information T1-T9 surrounding the selected location. The area represented by the nine tiles is greater than the display window formed by the display 22 on the mobile telephone. For example, in a particular example, the data can be loaded in nine tiles of 100 pixel square images in the PNG format. The average data volume of these tiles is approximately 9KB. In one example, where a mobile connection operating under the General Packet Radio Service (GPRS) protocol is used, the data transfer rate is typically in the range of 10-20 kbps (kilobits per second). At such a download rate, each tile can be provided in about 8 seconds. It will be appreciated that where a higher data transfer rates is available, the time for downloading a tile will be less. A status bar can be displayed to show the current progress of the data download. After a tile has been is downloaded, it can then be displayed to the user during the downloading of the remaining tiles. In this manner, the user can be provided fairly rapidly with part of a map relating to the selected location, with the remaining parts being supplied while the user is able to review the information downloaded in the first tile.

If the central tile T1 as represented in Figure 6 is downloaded first, then the part of the map centred on the location 75 selected by the user can be made available to the user first. The tiles T3, T5, T6 and T8 could then be downloaded next, with the comer tiles T2, T4, T7 and T9 being provided last. If this order is followed, then those tiles which contribute most to the displayed part of the map are provided first, with the tiles which contribute least being displayed subsequently. It will, however, be appreciated that in other examples, another order of downloading of the tiles could be provided.

It will also be appreciated that a number of tiles other than nine tiles could initially be downloaded. For example, if a larger number of small tiles were provided, then initial map information could be provided sooner, although due to the overhead of transmitting packets with the accompanying packet information, the overall download time would typically be increased.

As each tile is downloaded, it is cached in at least one of the primary and secondary caches 52 and 54 in the memory 36 of the mobile phone. As a user moves the cursor around the screen, the screen image can be regenerated using the cached imaged tiles, to provide seamless scrolling of the image represented in the display 20. This avoids a stepping approach from one image to another, and makes it much easier to view an exact area of interest. The image displayed on the screen can be centred to any exact location. The scrolling can be configured to work in all directions for the current layer of mapping, and theoretically as far as the total area of mapping for that layer on the server.

The operation of the cursor can be configured to be such that the user can move the cursor to the edge of a displayed screen area. Such an operation can be interpreted by the mapping application as a request to download further image tiles in the direction represented by the edge of the screen area to which the cursor has been moved.

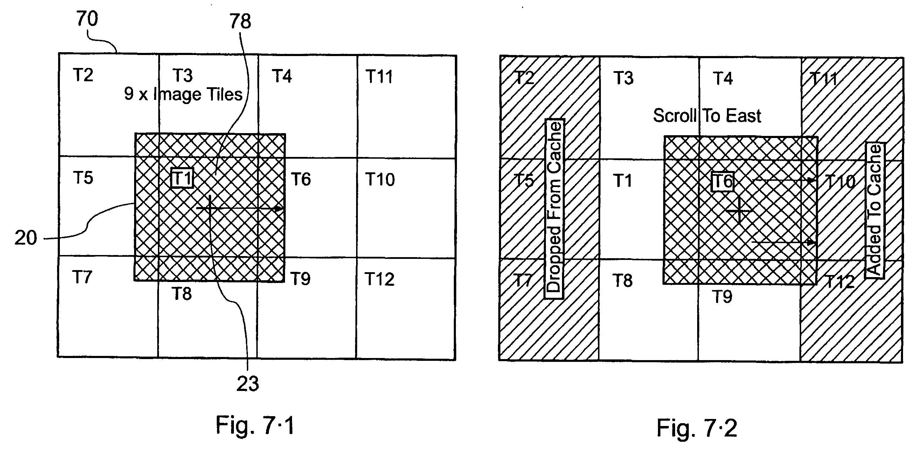

For example, as the user scrolls to the right (East), this can be interpreted by the mapping application as a user request for further mapping to the East of the area currently displayed, and the mapping application can issue requests to the map server to provide further tiles of information in that direction. Figure 7 represents this process. As shown in Figure 7, the user moves the cursor 23 to the right hand edge of the screen area as represented by the arrow 78. This is interpreted as a request for further mapping information to the right (East) of the currently displayed area, whereby the mobile phone mapping application requests the download of tiles T10, T11 and T12 from the server. As indicated in Figure 7.2 the new tiles T10, T11 and T12 are cached in one of the caches 52 and 54 in the memory 36 in the mobile telephone as will be described later in more detail.

Given the relatively small memory provided in current mobile telephones, it may be necessary to drop, or purge, some tiles which had been cached in the memory 36, in order to make space for the additional tiles, T10, T11 and T12. Accordingly, the mobile phone mapping application can be configured to drop those tiles that are furthest from the currently viewed location in order to make way for the additional tiles T10, T11 and T12. As indicated in Figure 7, this could involve dropping tiles T2, T7 and T5, (e.g., in that order). It should, however, be noted that this process is illustrated by way of example only in Figure 7. Typically, the memory in the mobile telephone will be sufficient to hold more than the twelve tiles illustrated in Figure 7.2, whereby the algorithm to make space in the memory in order to cache new tiles will normally only come into effect when significantly more tiles have been cached in that memory. This approach to refreshing the memory, and to purging tiles means that the application can be robust and the memory 36 can continually be refreshed.

As an enhancement to the process described with reference to Figure 7, when the tiles T1-T9 have initially been downloaded (as represented in Figure 7.1) it would be possible for the application to download additional tiles such as tiles T10, T11 and T12. Indeed, a complete set of tiles surrounding tiles T1-T9 (i.e. on all four sides) could be downloaded as a background task, whereby in the event that the user were to scroll rapidly to one side, there tiles surrounding the initially selected set of nine tiles will already have been downloaded. This could further enhance the smoothness of scrolling and the responsiveness to use input.

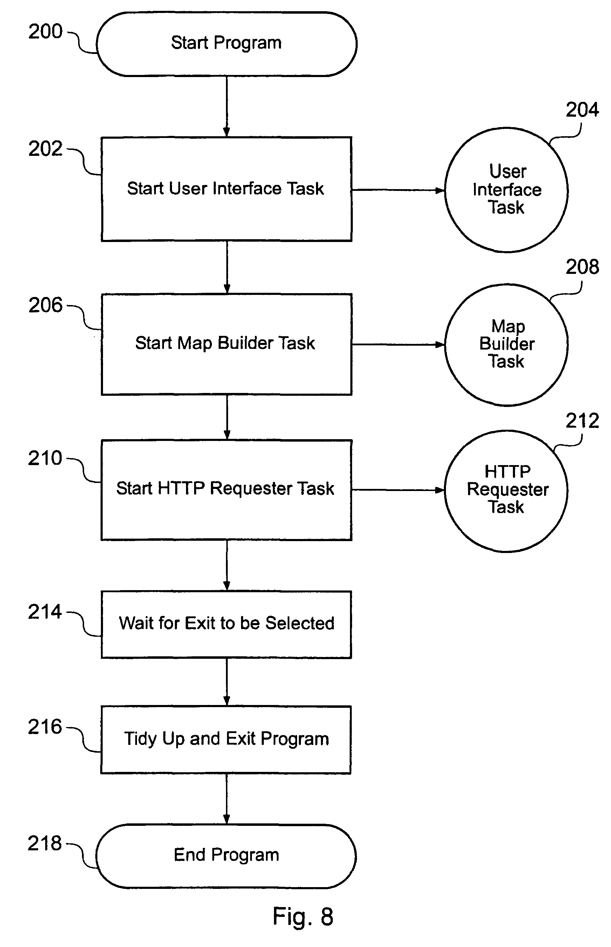

Figure 8 represents an overview flow diagram of the operation of the mapping application on the mobile telephone.

At step 200, the user initiates the operation of the mapping application, for example by selecting an icon from the mobile telephone screen display.

At step 202, a user interface task is started and control passes to a user interface task 204 to be described later with reference to Figure 9.

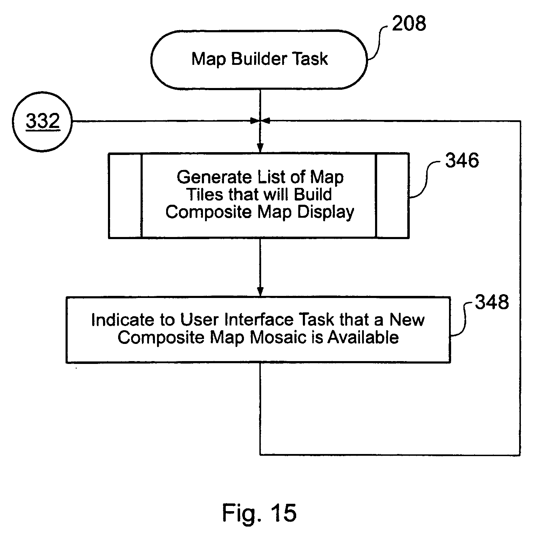

At step 206, a map builder task is started, control then passes to the map builder task at 208, as will be described in more detail with reference to Figure 15 later.

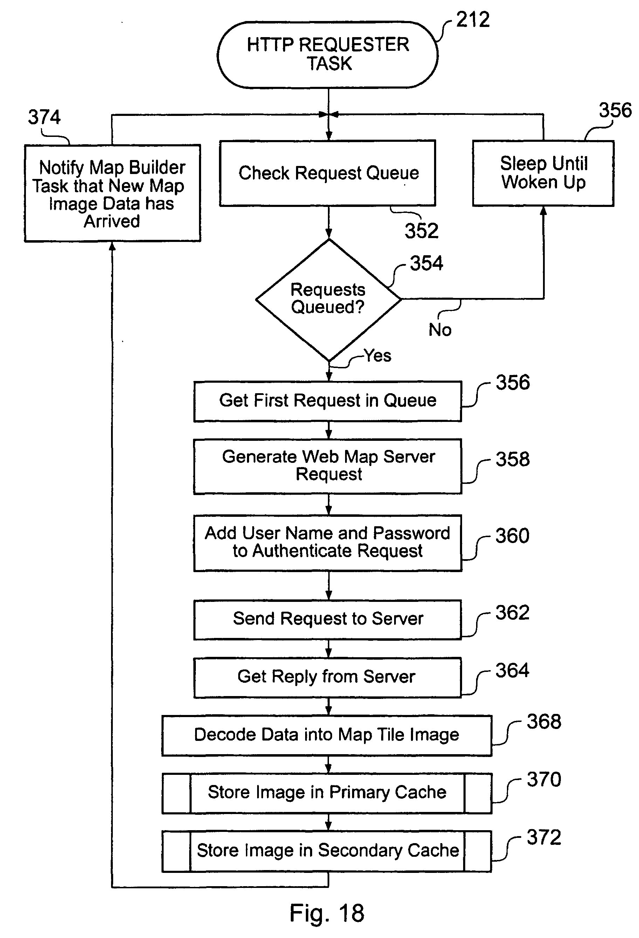

At step 210, a start HTTP request task is started, and control passes to the HTTP requestor task 212 as described later with reference to Figure 18.

After completion of the above referenced tasks, at step 214, the mapping application waits for exit to be selected.

At step 216, the mapping application tidies up and closes down the tasks, before exiting. Step 218 represents the end of the program.

Figure 9 is a flow diagram giving an overview of the user interface task 204.

At step 222, a user profile is set up from the record store 55 in the memory of the mobile telephone.

At step 226, a main menu is displayed on the screen, as described earlier.

At step 230, it is assumed that a user makes a user input by making a selection from the main menu screen described earlier.

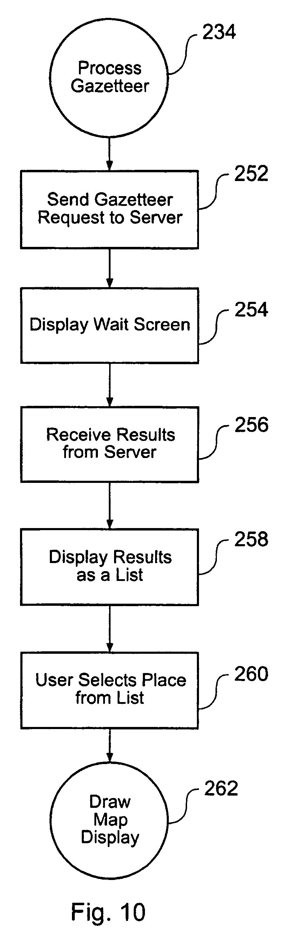

If, in step 232, the user selects a gazetteer function, then in step 234 a gazetteer task, as described later with reference to Figure 10, is called.

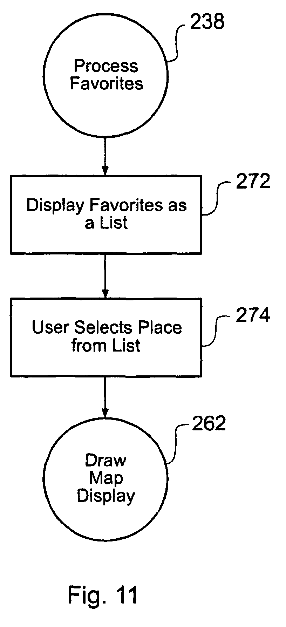

If, in step 236, the user selects a stored "favourite", then in step 238 a process favourites task as described later with reference to Figure 11 is called.

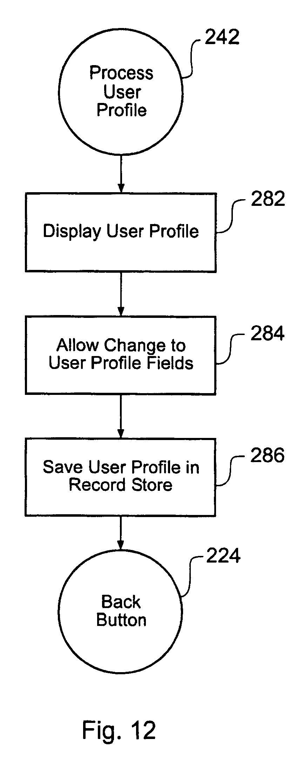

If, in step 240, a user selects a user profile, then in step 242, a process user profile task is called. The process user profile task is described in more detail with reference to Figure 12.

If in step 244, the user selects an exit, the program exits at step 246.

Figure 9 also shows a back button step 224, which provides a re-entry point to the flow diagram of Figure 9, as will be described with respect to the following figures. Likewise, the continue user interface task 228 is a step providing re-entry to the flow diagram Figure 9 from flow diagrams to be described later.

Figure 10 illustrates a process gazetteer task which is entered at step 234 (see Figure 9). In step 252, a gazetteer request is sent to the server. The gazetteer request will include the user identification of a location name, for example, as described earlier.

In step 254, a wait screen is displayed.

In step 256, results are received from the server.

In step 258, the results are displayed as a list.

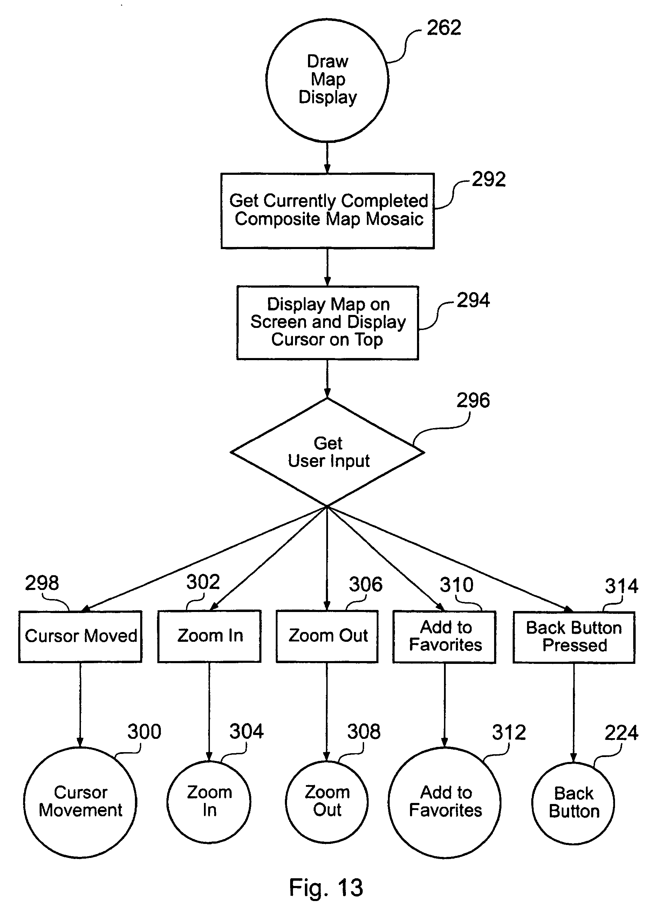

In step 260, the user selects a place from the list, and in step 262, a draw map display task is called as described later with respect to Figure 13.

Figure 11 describes a process favourites task. The process favourites task is called at step 238 (see Figure 9).

In step 272, a list of favourites stored in the record memory 55 of the client device are displayed as a list.

In step 274, the user selects a place from the list and in step 262, the draw map display task to be described with reference to Figure 13 is called.

Figure 12 illustrates a process user profile task. The process user profile task is called at step 242, as described with reference to Figure 9.

In step 282, a user profile is displayed to the user.

In step 284, the user is allowed to change user profile fields.

In step 286, the user profile as amended is stored in the record store 55 in the client device. In step 224, control passes back to step 224 as shown in Figure 9.

Figure 13 gives an overview of the draw map display task which is called from step 262 as shown in Figures 10 and 11 to display the map centred on the selected location.

In step 292, the currently completed composite map mosaic (i.e. the combination of the available map tiles) is obtained.

In step 294, the available portion of the map field formed by the composite map mosaic is displayed on the display screen of the client device with a cursor displayed on top of the map image, to identify the currently selected location within the displayed image. In step 296, the draw map display task is responsive to user input.

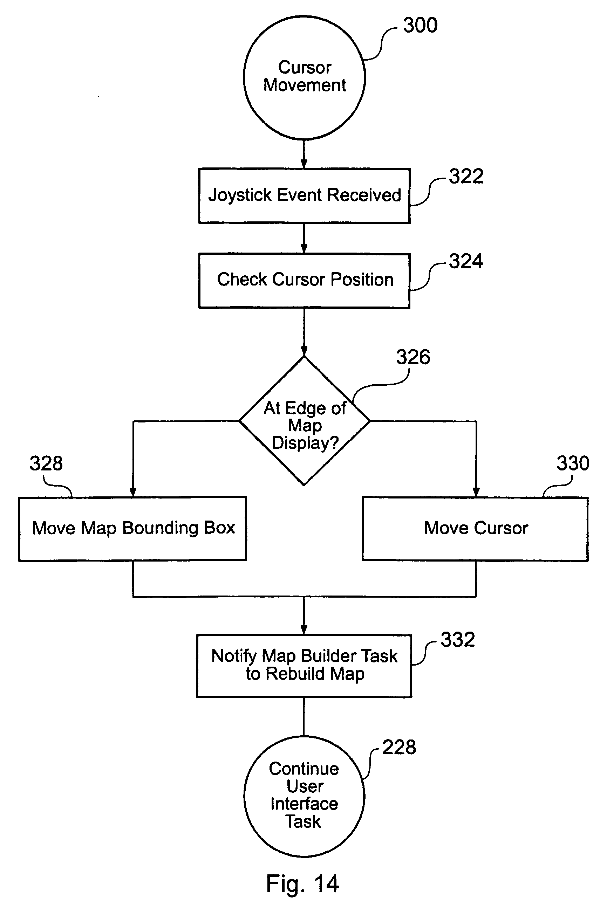

If in step 298, the user input relates to movement of the cursor, for example by operation of a pointer device, then a cursor movement task 300 as described with reference to Figure 14 is called.

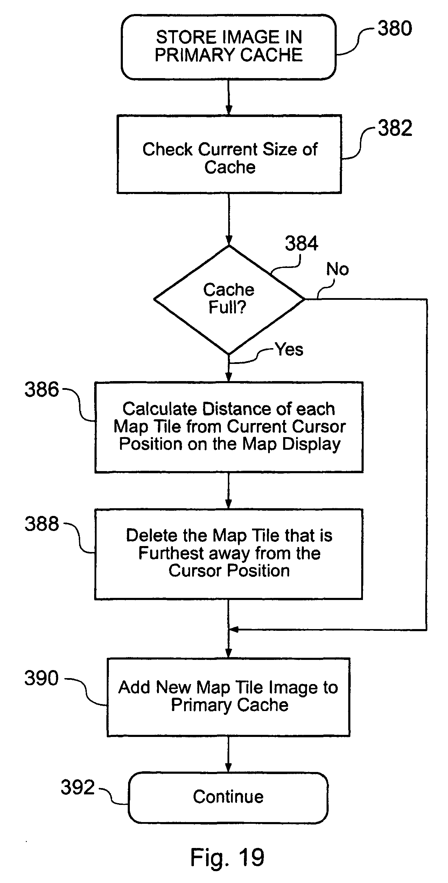

If in step 302, the user input is representative of a request to zoom in, then in step 304, a zoom in task as described later with reference to Figure 19 is called.

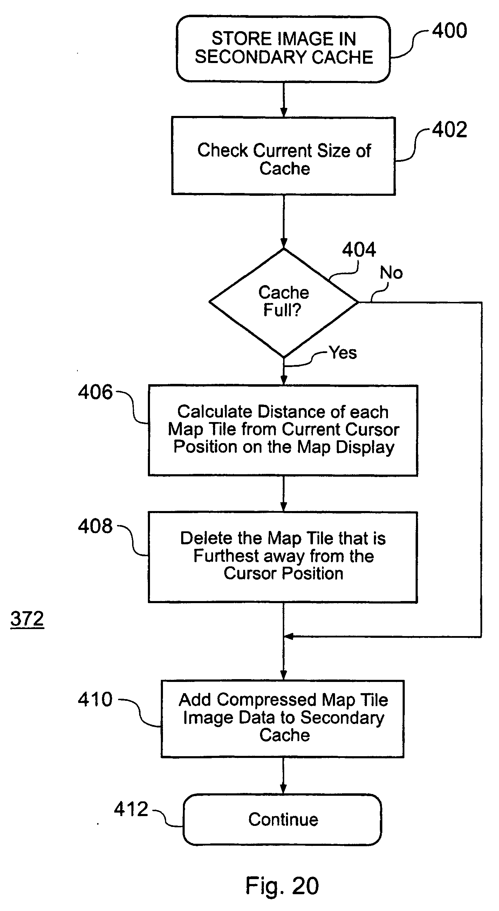

If in step 306 a user input representative of a request to zoom out is detected, then in step 308 a zoom out task as described with reference to Figure 20 is called.

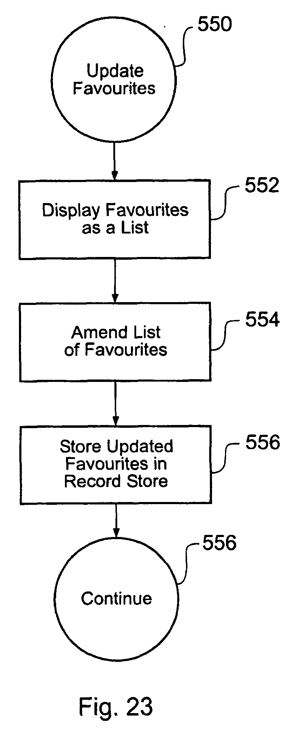

If in step 310, a user input representative of an add to favourites request is detected, then in step 312, an add to favourites task is called as described with reference to Figure 23.

If, in step 314, pressing of a back button is detected, then in step 224, the control passes back to the back button step 224 as shown in Figure 9.

Figure 14 illustrates an example of a process of moving a received map image within the display of the mobile telephone 16.

In step 322, a pointing device (e.g., joystick) event is noted by the map application, whereby movement of the joystick or other pointing device by the user is effected to cause movement of a displayed cursor.

In step 324, the map application checks the current position of the cursor on the display.

If, it is determined in step 326 that the map is at the edge of the display, then, in step 328, the bounding box for the currently displayed image is moved in the direction corresponding to the direction indicated by the joystick movement. In other words, if as in Figure 7.1 the pointing device operation is indicative of movement to the right where the cursor is already at the right hand edge of the display, then the map bounding box which corresponds to the boundary of the screen 20 is moved to the right is represented in Figure 7.2.

Alternatively, if it is determined in step 326 that the cursor is not at the edge of the display screen, then in step 330 the cursor position is moved on the display.

In either case, map builder task to be described with reference to Figure 15 is notified in step 332 that is should regenerate the map display. The user interface task then continues at step 228 in Figure 9.

Figure 15 is a flow diagram giving an overview of a map builder task. The map builder task is initiated at step 208 illustrated in Figure 8, and is called by step 332 as shown in Figure 14.

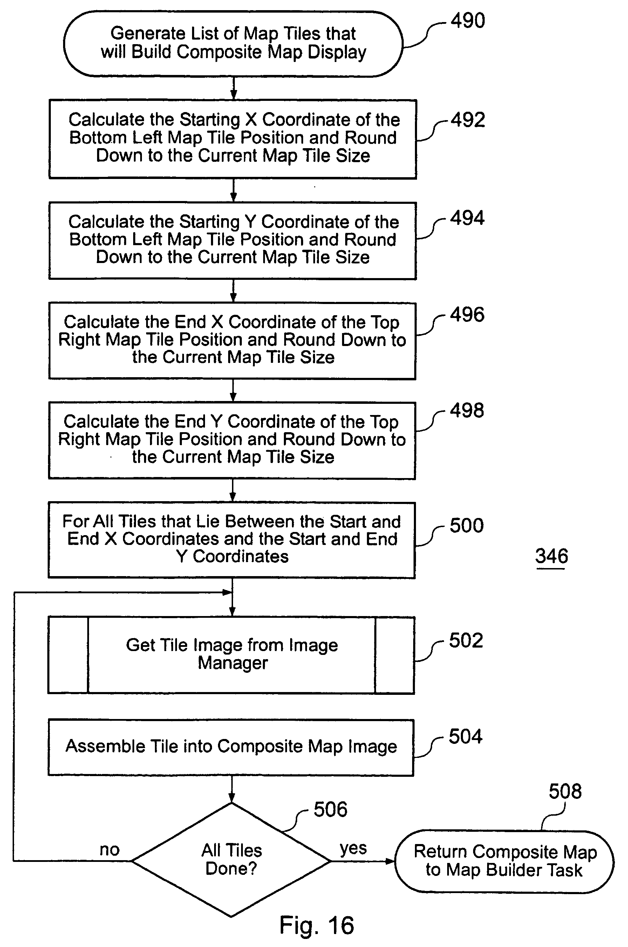

In step 346, the map builder task is operable to generate a list of map tiles that will build a composite map display. This step is described in more detail in Figure 16.

In step 348, the map builder task is operable to indicate to the user interface task that a new composite map mosaic is available.

As indicated above, Figure 16 illustrates step 346 of Figure 15 in more detail. In particular, Figure 16 illustrates a process represented at 490 of generating a list of map tiles that will build a composite map display.

In step 492, the mapping application is operable to calculate a starting x co-ordinate of the bottom left hand map tile position and to round down to the current map tile size.

In step 494, the mapping application is operable to calculate the starting y co-ordinate of the bottom left hand map tile position and to round down to the current map tile size.

In step 496, the mapping application is operable to calculate the end x co-ordinate of the top right hand map tile position and to round down to the current map tile size.

In step 498, the mapping application is operable to calculate the end y co-ordinate of the top right map tile position and to round down to the current map tile size.

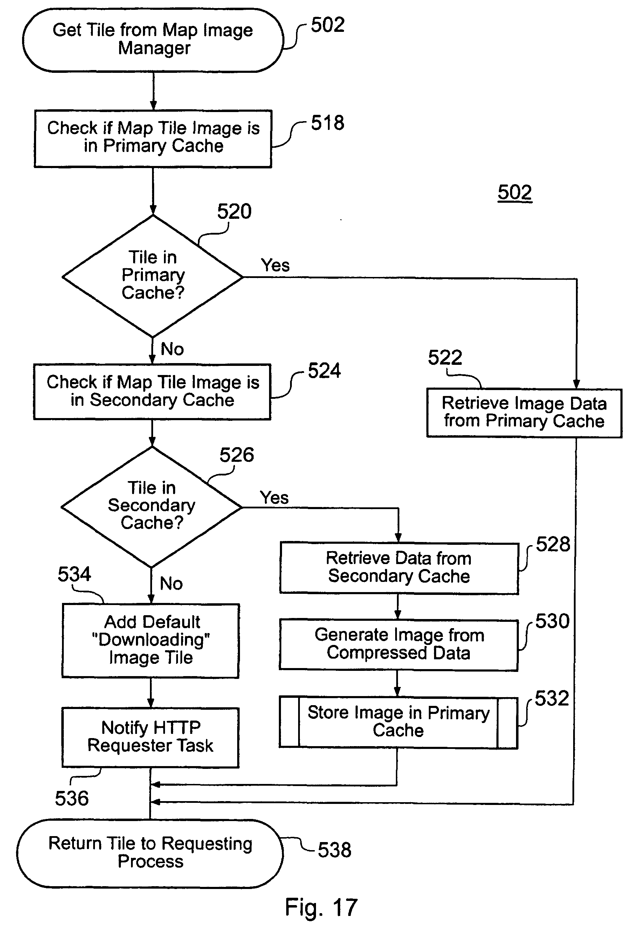

Step 500 represents the start of a loop including steps 502, 504 and 506 that is operable to repeat steps 502, 504 and 506 for all tiles that lie between the start and end x co-ordinates and the start and end y co-ordinates. In step 502, the appropriate map tile image is obtained from an image manager (as described in more detail with reference to Figure 17) and in step 504, the tile is assembled into a composite map image. In step 506, a test is made as to whether all tiles are now done, and if not, steps 502 and 504 are repeated for subsequent tiles. If in step 506 it is determined that all tiles have been done, then in step 508, the control returns to the map builder task of Figure 15, to proceed to step 348. ,

As discussed earlier, the tiles can be provided in different scales. Table 1 below illustrates examples of possible map scales, map tile widths and image tile widths as can be used by the task of Figure 16 to calculate tile co-ordinates for the three scales 1:1,000,000, 1:250,000 and 1:50,000 discussed earlier.

**TABLE 1**

| Map Scale | Map Tile Width (in metres) | Image Tile Width (in pixels) |
|---|---|---|
| 1:1,000,000 | 25000 | 100 |
| 1:250,000 | 5000 | 100 |
| 1:50,000 | 1000 | 100 |

Figure 17 represents the steps of getting a tile from a map image manager as called at step 502 of Figure 16.

In step 518, a check is made if the required map tile image is in a primary cache in the mobile phone.

If, in step 520, it is determined that the tile is in the primary cache 52, then in step 522, the image data is retrieved from this primary cache 52.

Alternatively, if it is determined in step 520 that the map tile is not in the primary cache 52, a check is made in step 524 whether the map tile image is in a secondary cache 54.

If in step 526, it is determined that the tile is found in the secondary cache 54, then data is retrieved from the secondary cache in step 528, an image is generated from compressed data representative of that tile in step 530 and the images are stored in the primary cache in step 532, the process of storing an image in the primary cache being described in more detail with reference to Figure 19, below.

Alternatively, if the tile is not found in the secondary cache, then in step 534, a default "downloading" tile is added to the composite map image while the image tile required is downloaded.

In step 536, the HTTP requester task described with reference to Figure 18 below, is notified that a new tile is to be downloaded.

In step 538 the required tile is returned to the requesting process (e.g., at step 502 in Figure 16).

It can be seen from Figure 17 that efficient use of the limited storage capacity of the mobile telephone can be effected, while reducing the number of requests that need to be made to download further image tiles. In particular, image tiles that are currently visible on the map display can be held in decompressed format in the primary cache, with tiles that have been received from the server 17, but are not currently being displayed can be held in compressed format in the secondary cache.

Figure 18 illustrates an example of a process for obtaining map tiles for generating a map display.

In step 352, a request queue is checked to see if any requests are queued.

If in step 354, it is determined that no requests are queued, the process sleeps in step 356 until woken up.

Alternatively, if it is determined in step 354 that requests have been queued, then in step 356 the process gets the first request from the queue.

In step 358, a web map server request is generated.

In step 360, the user name and password are added to the map server request to authenticate that request.

In step 362, the request is then sent to the server.

In step 364, a supply is subsequently received from the server.

In step 368, the received data is decoded into a map tile image.

In step 380, the received image is placed into the primary cache.

In step 382, image data is also placed into the secondary cache (that is, the undecoded data).

In step 384, the map builder task is notified that new map image data has arrived, in particular the map image data becomes available at step 536 in Figure 17 whereby the image data can then be returned in step 536 of Figure 17.

Figure 19 illustrates an example of a task of storing a decompressed map tile in the primary cache 52. This task can be called by step 352 in Figure 17, or step 370 in Figure 18.

In step 382, the current capacity of the primary cache is checked.

If, in step 384, it is determined that a cache is full, then in step 386, the distance of each map tile from the current cursor position on the map display is calculated.

In step 388, the map tile that is furthest away from the current cursor position is deleted from the primary cache.

Subsequently, or in the case when the cache is determined in step 384 not to be full, the new decompressed map tile is added to the primary cache in step 390.

This process then returns to step 392 to the step 532, Figure 17, or 370, Figure 18, that called this task.

Figure 20 illustrates an example of a task 400 of storing compressed map tiles in the secondary cache 54. This task can be called by step 372 in Figure 18.

In step 402, the current capacity of the secondary cache is determined.

If in step 404, it is determined that the secondary cache is full, then in step 406, the distance of each map tile from the current cursor position on the map display is determined.

In step 408 the map tile that is furthest from the current cursor position is then deleted.

Subsequently, or in the case that it is determined in step 408 that the cache is not full, the compressed map tile is added to the secondary cache in step 410.

This process then returns at step 412 to the step that called it (e.g. step 372 in Figure 18).

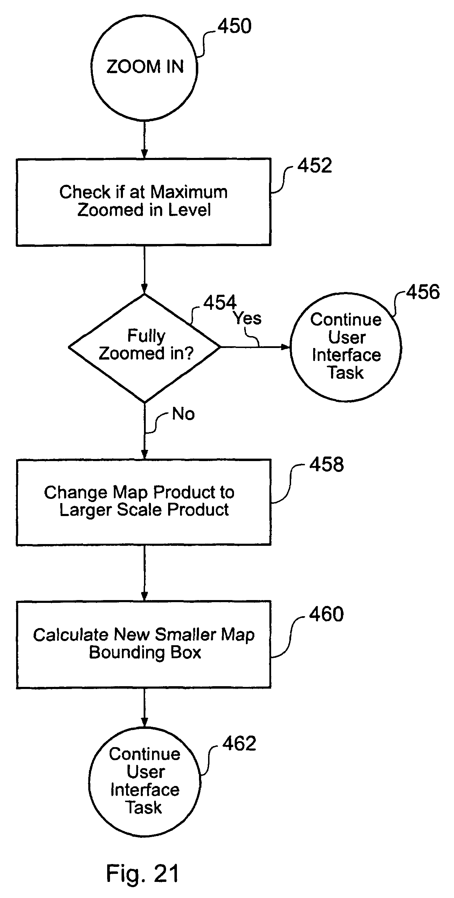

Figure 21 illustrates an example of a task for zooming in an image. This process can be called, for example, from step 304 of Figure 13.

In step 452, a check is made in response to a request to zoom in, whether the current scale is at the maximum zoomed-in level.

If it is determined in step 454 that the image is fully zoomed in, then the process stops in step 456.

Otherwise, the map product is changed to a larger scale product in step 458, and the display is regenerated in 460.

At step 462, the user interface task of Figure 13 then continues.

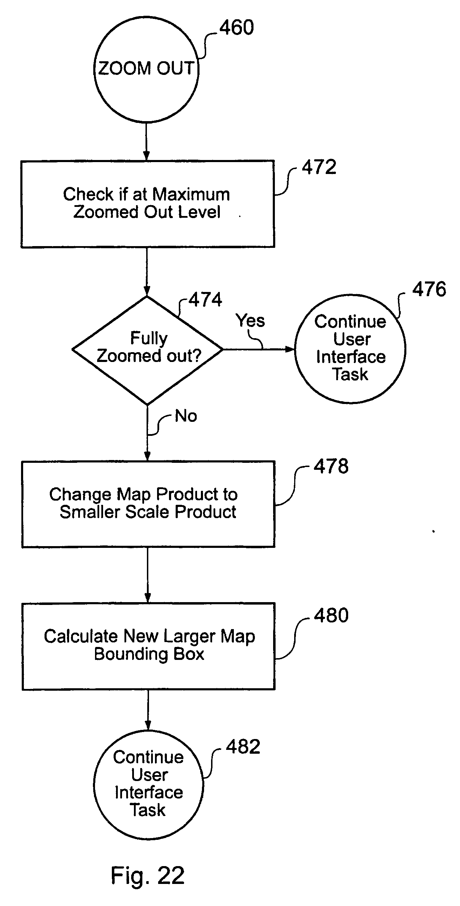

Figure 22 illustrates an example of a task 460 for zooming out an image. This task can be called, for example, from step 306 of Figure 13.

In step 472, a check is made in response to a request to zoom out, whether the current scale is at the maximum zoomed-out level.

If it is determined in step 474 that the image is fully zoomed out, then the process stops in step 476.

Otherwise, the map product is changed to a smaller scale product in step 478, and the display is regenerated in 490.

At step 482, the user interface task of Figure 13 then continues.

Figure 23 illustrates a task whereby the user favourites may be updated. This task can be called by step 312 of Figure 13.

In step 552, the current list of favourites is displayed as a list.

In step 554, the user is able to amend the list of favourites. This can include adding a favourite, but could also include deleting a favourite, or changing an order of the list of the favourites as displayed, whereby a particular favourite is displayed first.

In step 556, the updated favourites are stored in a record store, and in step 558, the user interface task of Figure 13 continues.

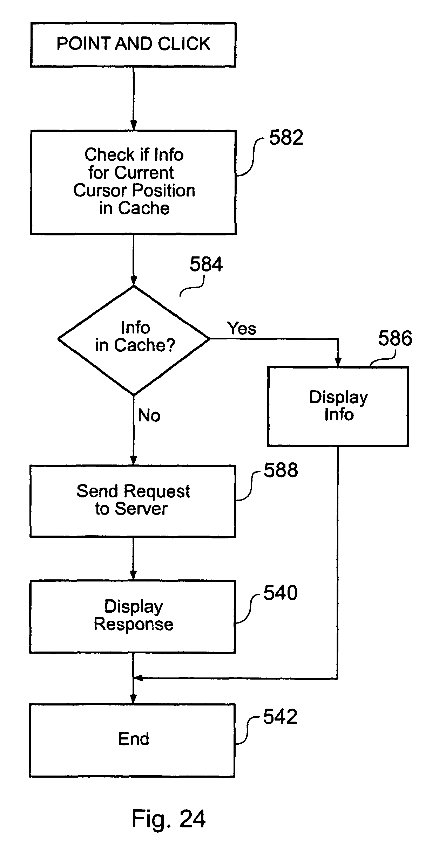

A further function that can be provided in the context of the map application is to provide additional information regarding particular objects and/or locations represented on the map image. This can be performed, for example, by responding to a point and click operation using the pointing device. An example of this is illustrated with respect to Figure 24. Figure 24 is a flow diagram illustrating a point and click operation. This can occur at any time as an independent task.

In step 582, in response to a click operation using the pointing device, the map application is operable to check whether information for the currently identified cursor position is stored in the client cache.

If it is determined in step 584 that information is stored in the cache, then this can be displayed in step 586.

Alternatively, if it is determined that information is not stored in the cache, or that the cache merely contains a pointer to information stored elsewhere, then in step 588, the map application can be operable to send a request to the server for such information.

In step 540, the map application can be operable to receive the response from the map server, which response can either include information about the selected position, or a response indicating that no information is available. In either case, the response as received can be displayed to the user.

The process stops in step 542.

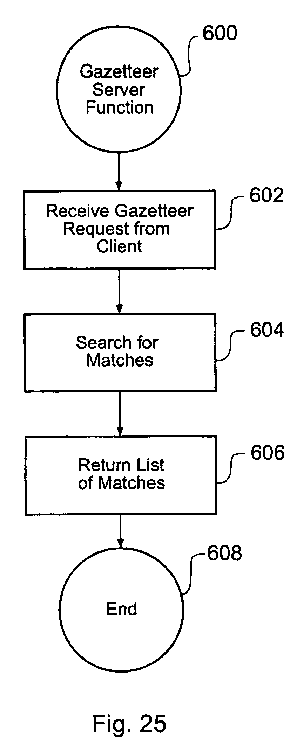

Figure 25 is a flow diagram giving an overview of a gazetteer function 602 performed by the server.

In step 604, the gazetteer function is operable to receive a request from the client for a gazetteer search. The search request will be in the form of one or more packets of information from the client, indicating the identity of the client (e.g. a telephone number) and an argument, for example all or part of a place name, a map reference, a location, or some other identifier.

In step 604, the server gazetteer function is operable to perform a search for matches with the received argument.

In step 606, the gazetteer function is operable to generate one or more packets of information including the list of matches and to return this to the client.

In step 608, this process terminates.

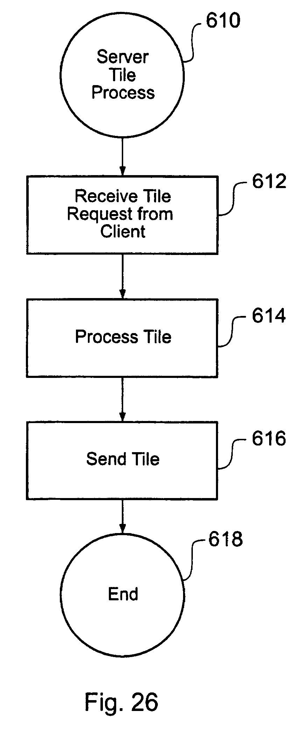

Figure 26 is a flow diagram giving an overview of a server tile process 610.

In step 612 a server tile process is operable to receive a tile request from a client. The tile request can include one or more packets identifying the client (e.g. a telephone number) and information identifying the tile to be downloaded (for example the x and y co-ordinates of the tile within an overall image field). The request can also include an identification of a particular scale of image required.

In step 614, the server tile process is operable to process the tile for dispatch. This can involve identifying the appropriate tile information from a database 91 held in storage 106, compressing the data in accordance with the appropriate format, "e.g., the "PNG" format described earlier, and applying appropriate packet headers.

The tiles can be derived from data defining at least one layer of a map 91 held, for example in the storage 106. As discussed earlier, various layers of mapping information could be provides, for example at 1:1,000,000, 1:250,000 and 1:50,000 scale. A different number of one or more layers and different scales could be provided, as required. Also different versions of the maps, for example with different levels of details and/or colours could be provided for interfacing with different client devices depending on the communication bandwidth to, and the processing and storage capacity of the client device concerned.

Particularly if the client device is a "thin" client device such as a mobile telephone, that is a client device with a relatively low communication bandwidth and/or a relatively low storage capacity and/or processing capacity, then the source data for the mapping information is either initially held as, or is processed to provide a limited number of colours to provide smaller file sizes when downloading the tiles.

The map could be held in a raster format, a vector format, or any other applicable format. The tiles can be compressed for transmission in, for example, the aforementioned PNG format.

In step 616, the packets of compressed tile data are transmitted to the client. In step 618, this process terminates.

Figures 25 and 26 provide examples of some of the operations of the server in communicating with a client device such as a mobile phone 16. These operations can be provided using a server application 90 comprising program code held in the memory 104.

The above-described communication between the client device and the server is performed by transferring packets of data. The packets of data can be configured to include information identifying the client device and optionally additional information identifying a mapping session. A mapping session can be, for example, a period when the mapping application is active on the client device. In this way, the server can use the session information (or alternatively the client device identification) to record the map tiles that have been sent to the client during that session. The server can be operable to cancel the record for the session after a selectable time during which no further requests for downloaded tiles have been received.

There has therefore been described a method and apparatus whereby a portion of an image field (e.g., a map) to be displayed on a display at a client device (e.g., a thin client such as a mobile phone) is downloaded on request from a server as a plurality of image tiles representing respective portions of the image field. A first image tile represents a portion at the centre of the image to be displayed on the display and further image tiles represent portions surrounding the first tile. The total area of the image tiles exceeds the area of the display. Each tile is displayed as it becomes available. Additional tiles image can be requested automatically from the server in response to a user navigating to the edge of the displayed image.

There has, moreover, been described an application that can provide mapping services on a client device such as a mobile telephone. The described application enables the efficient and user friendly display of selected portions of a map and, optionally, information relating to the map. Thus, an embodiment of the invention can provide functions of a pan tool and an information or query tool. The pan tool enables moving, grabbing and scrolling of a current view location, and the information tool allows the interrogation of features shown on the map by a point and click process. These fundamental functions can be combined in a particular embodiment of the invention via a single interface, in the form of a pointing device provided by the client device. Thus, for example, a cursor can be controlled by a joystick on the mobile telephone and the map view can be moved as the cursor reaches the edge of the displayed image. The cursor can also be moved across features of the map and a query can be sent to the server by depressing the joystick. Depressing the joystick can either interrogate a feature shown at the location of the "click", or can simply send co-ordinates as a request to the server for any information about the cursor location to be queried.

The use of the three tasks illustrated in Figure 13 enables a user to experience a more responsive map interface. The user interface task allows the cursor to be scrolled continuously without a stopping or jerking motion when the display boundaries are reached. The map builder task allows a map to be assembled quickly from existing map image tiles in the caches and to substitute a default "downloading" tile when the map image data is not present. This allows the composite map to be built while not having to wait for any network access. Separating the HTTP requester into a separate task prevents the user interface from "locking up" when network response is slow or the network has failed. Accordingly, having the map building task as a third task, which is separate from the network access (HTTP requestor) task and from the user interface task, means that smooth and seamless scrolling can be affected.

In the above-described embodiment, a single tile is downloaded by the server in response to each request from the client device. In the present example, the mapping application is designed for a mobile telephone with sufficient processing capacity to enable the calculation of the identity of each individual tile that needs to be downloaded. For example, as described above with reference to Figure 16, the mapping application is operable to calculate the x and y co-ordinates of the individual tiles, and to provide this information to the server. However, in other applications, one may wish to send a request from the client device to the server for a block of tiles to be downloaded and in response to a single request, the series of tiles could then be downloaded automatically by the server. Also, it may be desired that the client device does not actually calculate the tiles to be downloaded, but merely provides the selected location to the server, whereby the server will perform the identification of the individual tiles to be downloaded, and then will download those tiles as a stream in response to a single initial request based on a particular location from the client device. These alternatives may be desired where, for example, the process is designed for a client device which does not have sufficient processing power to identify the tile co-ordinates, or where, for example, the data to be downloaded is not available in a format which is conducive to ready determination of x and y co-ordinates, for example, for the individual tiles. It will be appreciated that these are merely examples of situations where one may wish to employ a different downloading strategy to the one described in respect of the above referenced specific example.

Also, throughout the specification, references made to the display of images. It should, be understood, that the use of the term images, does not refer to a particular format in which data is stored. For example, as indicated above, the data may be stored and represented using a raster-scanned image. Alternatively, the image may be stored and generated from data stored in a vector, or vectorised, format.

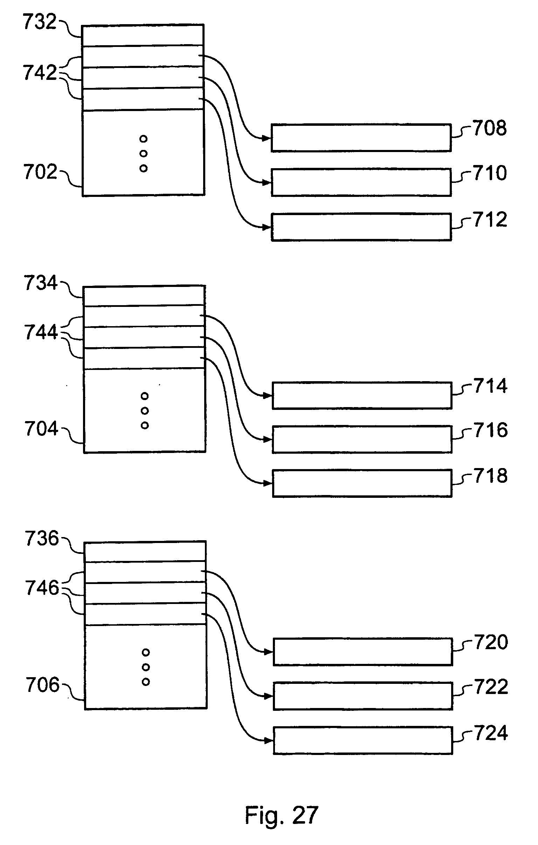

Figures 27 to 29 illustrate an example embodiment of the invention in which image data is provided in vector format. An example of vector format mapping can provide different layers of features. For example in one example, layers as set out in Table 2 below can be provided.

**TABLE 2**

| Layer | Category | Types |
|---|---|---|
| 1 | Polygons | Land type |
| | | Buildings |
| | | Roads |
| | | Water |
| | | Etc. |
| 2 | Lines | Boundaries |
| | | Fences |
| | | Etc. |
| 3 | Text | Road names |
| | | Building numbers |
| | | Etc. |
| 4 | Points | Points of interest |
| | | Post Offices |
| | | Public Houses |
| | | Libraries |
| | | Etc. |

Table 2 illustrates only one possible example of features forming a vector representation of mapping information. Various examples of features, or vector items represented in Table 2 are explained in more detail below.

In layer 1, the polygons form features defining closed areas of mapping information bounded by vectors. For example, a rectangle having comers at co-ordinates (i,j), (i+1,j) (i+1,j+1) (i,j+1), respectively, can be represented by those co-ordinates, whereby the square is then bounded by a sequence of four vectors that join the comer points. A circle can be represented by a sequence of co-ordinates of points along the circumference of the circle at a desired resolution, whereby the circle is then bounded by a sequence of vectors that join those points. The more co-ordinates and the more vectors that are used, the closer the representation approximates to a true circle. Other more complex polygons can be represented in a similar way by defining the co-ordinates of selected points on the boundary of the polygon. Polygons can be used to define, for example the outline of parcels of land, buildings, roads, water features such as rivers, lakes etc., and so on.

Each polygon has a unique identifier (UID). An example of a data structure entry for an instance of a polygon can include a plurality of fields. For example, a UID field can hold the UID for an instance of a polygon. A polygon type field can identify a type of area identified by the instance of the polygon (e.g., a land use type, etc). A descriptive text field could be provided to hold a description of an instance of the polygon. A co-ordinates field can contain a series of sets of co-ordinates defining the closed boundary of the instance of the polygon. A further field can include bounding box co-ordinates (e.g., co-ordinates defining for example the bottom left and top right, or the top left and the bottom right, of a rectangle bounding the feature) to define the extremities of the feature.

A polygon data structure entry can also include one or more display parameter fields defining display parameters for the instance of the polygon including, for example, a defining of the boundary representation, a fill colour and or pattern, etc. If the display parameters field is not provided or not populated in a polygon data structure entry, then display parameters can be generated by a display engine in a programmable manner using information from the other fields of the data structure entry for the instance of the polygon. A display engine can also choose to use alternative display parameters in a programmable manner in preference to using provided parameters.

In layer 2, lines form linear features on a map, including features such as boundaries. For example, administrative and political boundaries can be represented by such lines. Also physical features such as walls, fences, hedges, etc can be represented by lines. The lines can be defined in the same manner as the polygons, that is using a sequence of vectors, although in the case of lines, the objects do not need to be closed, and the lines do not define the interior of an area bounded by such lines in the case that they do form a closed sequence of vectors.

Each line has a unique identifier (UID). An example of a data structure item for an instance of a line can include a plurality of fields. For example, a UID field can contain the UID for an instance of a line. A line type field can identify a line type for the instance of the line. A descriptive text field could be provided to hold a description of an instance of the line. A co-ordinates field can contain a series of sets of co-ordinates defining co-ordinates of the instance of the line. A further field can include bounding box co-ordinates (e.g., co-ordinates defining for example the bottom left and top right, or the top left and the bottom right, of a rectangle bounding the feature) to define the extremities of the feature.

A line data structure entry can also include one or more display parameter fields defining display parameters for the instance of the line including, for example, the line representation, a colour, etc. If the display parameters field is not provided or not populated in a line data structure entry, then display parameters can be generated by a display engine in a programmable manner using information from the other fields of the data structure entry for the instance of the line. A display engine can also choose to use alternative display parameters in a programmable manner in preference to using provided parameters.

In layer 3, text items provide further features. The text can represent any text information to be provided on the map including, for example, the names of road, numbers of buildings, etc. Each text item can be provided with a unique identifier (UID). An example of a data structure entry for a text item can include a plurality of fields. For example, a UID field can contain the UID for an instance of text item. A type field can identify a text type for the instance of the polygon (e.g., a name, a number etc.). A descriptive text field could be provided to hold additional information about the text item. A text field can contain the text to be displayed. A co-ordinates field can contain co-ordinates identifying a mapping location for the text. An orientation field can indicate the orientation of the text. A further field can include bounding box co-ordinates (e.g., co-ordinates defining for example the bottom left and top right, or the top left and the bottom right, of a rectangle bounding the feature) to define the extremities of the feature.

A text data structure entry can also include one or more display parameter fields defining display parameters for the instance of the text item including, for example, a defining of the text font and size, a text and background colours, etc. If the display parameters field is not provided or not populated in a text data structure entry, then display parameters can be generated by a display engine in a programmable manner using information from the other fields of the data structure entry for the instance of the text item. A display engine can also choose to use alternative display parameters in a programmable manner in preference to using provided parameters.

In layer 4, point items also form features. The point items can represent, for example, points of interest, the locations of post office, public houses, libraries, tourist attractions, etc. Each point item can be provided with a unique identifier (UID). An example of data structure item for an instance of a point item can include a plurality of fields. For example a UID field can contain the UID for an instance of a point item. A type field can identify a point type (e.g., a type of point of interest). A descriptive text field could be provided to hold a description of an instance of the point item. A co-ordinates field can contain co-ordinates identifying a mapping location for the point item. A further field can include bounding box co-ordinates (e.g., co-ordinates defining for example the bottom left and top right, or the top left and the bottom right, of a rectangle bounding the feature) to define the extremities of the feature.

A point data structure entry can also include one or more display parameter fields defining display parameters for the instance of the point item including, for example, a display representation of the point item, etc. If the display parameters field is not provided or not populated in a point data structure entry, then display parameters can be generated by a display engine in a programmable manner using information from the other fields of the data structure entry for the instance of the point item. A display engine can also choose to use alternative display parameters in a programmable manner in preference to using provided parameters.

The UIDs for the polygon, line, text and point features can be selected such as readily to identify the category (i.e. polygon, line, text or point type) and type (e.g., for a polygon, whether it relates to a land type, building, roads, water, etc.) of feature. Alternatively, they may simply be allocated in a random or sequential manner as new features are defined.

Table 3 below illustrates a specific example data structure items (described in more general terms above) for polygon, line, text and point features. In this example, each data structure entry includes all of the common parameters plus the additional parameters according to the feature category (polygons, lines, text and points).

**TABLE 3**

| Common to all (polygons, lines, text and points) | |
|---|---|
| IMapRectangle bbox; | // The bounding box of the feature |
| Long toid; | // The UID |
| int featureCode; | // What a feature is (i.e. a road) |
| int scale; | // Used as a multiplier to keep co-ordinates as integers |
| Color outerColor; | // Colour of the boundary |
| Color innerColor; | // Internal colour |
| | - - - - - - |
| | |

| Polygon Features | |
|---|---|
| List linearRings; | // First is a list of outer co-ordinates |
| | // Next rings are inner holes (also lists of co-ordinates) |
| | - - - - - - |
| | |

| Line Features | |
|---|---|
| List points; | // List of co-ordinates |
| | - - - - - - |
| | |

| Text Features | |
|---|---|
| String text; | // Text for a string |
| int font; | // Font |
| int text_ht; | // Text height |
| int dig_posn; | // First text item spacing to the feature co-ordinate |
| int orient; | // Text orientation angle |
| IMapPoint imapPoint; | // Co-ordinate for the feature |
| | - - - - - - |
| | |

| Point Features | |
|---|---|
| int symbolType; | // Type of point symbol for identifying point of interest |
| IMapPoint imapPoint; | // Co-ordinate for the feature |
| | - - - - - - |

Tiles can be identified with respect to a single reference point, for example the bottom left comer. However, where the tile has a given size, bounding box co-ordinates for the tile, for example co-ordinates defining the bottom left and top right of the tile, can be derived therefrom. The bounding box co-ordinates of a tile are used in the present example to determine whether a particular feature overlaps, or lies at least partially with, a given tile.

The features can also be grouped together according to the features that map to a given tile. This grouping can be termed a feature collection. The data structure entry for such a grouping can be termed a feature collection entry. Table 3 below illustrates the format of a feature collection entry.

**TABLE 4**

| Feature Collection | |
|---|---|
| IMapRectangle bbox; | // The bounding box for a tile |
| List polygons; | // A list of the polygons that map to the tile |
| List lines; | // A list of the lines that map to the tile |
| List text; | // A list of the text that maps to the tile |
| List points; | // A list of the lines that map to the tile |
| | - - - - - - |

An example of the present invention makes use of a database held in a server that contains mapping data in vector format. The vector data features can be as described above. The format in which the data is held in the server database and the structure of the server database lies outside the scope of the present document, and is not needed for an understanding of the present invention. The server database format could employ any number of conventional database formats for spatial data, for example a quad-tree or R tree format. Quad trees and R-trees provide tree-based structures for the storage of spatial data, enabling retrieval of data items according to their spatial locations.

The client device is able to maintain a subset of the data stored in the server. It would be possible to maintain a quad-tree or R-tree based representation. However, in the present example, as the number of tiles of information that are maintained at any one time is not large, a simpler structure for the local storage of data is employed.

Figure 27 illustrates an example of a data structure that can be generated in a client for representing an association between features and tiles that are being held at the client. The data structure can be held in the primary cache 52 (Figure 5). In the illustrated example, a tile entry is provided in a data structure for each tile of mapping data that is held by the client. Figure 27 illustrates three such examples of tile entries 702, 704, 706 for illustrative purposes. Of course, there can be more or less tile entries, but in a typical implementation, more such tile entries may be held by the client at any one time. In this example, each tile entry 702, 704, 706 includes a field 732, 734, 736 defining a unique identifier for the tile. Each tile entry can, for example, be addressed using the unique identifier for the tile. Optionally, each tile entry can include further fields (not shown) pointing to tile entries for respective adjacent tiles held in the in the manner of a linearly or two dimensionally (north-south and east-west) linked list.

As illustrated, each tile entry also includes a set of pointers to feature entries for each feature that at least partially falls within the tile concerned. For example as illustrated, entry 702 includes a list of links (e.g., pointers) 742 to a set of feature entries 708, 710, 712. Similarly, the tile entry 704 includes a list of links 744 to a set of feature entries 714, 716, 718 and the tile entry 706 can include a list of links 746 to a set of feature entries 720, 722, 724. Each of the feature entries can have a format for a feature of layers 1 to 4 as appropriate. For example the feature entries can have a format as described above with reference to Tables 2 and/or 3 above. The feature entries can optionally be held as part of the tile entries. However, as one feature may extend over multiple tiles, the use of links to feature entries that are accessible from multiple tile entries provides more efficient storage of the feature information.

The tile entries can be configured as, or include, a feature collection entry as described with reference to Table 4.

Feature information can be downloaded and displayed on a tile by tile basis using an approach as described above with reference to Figures 8 to 26 as for raster-based mapping information. However, various optimisations can also be employed to enhance the perceived downloading and display rate to the user and/or also to actually increase the downloading rate. For example, as at least some features may extend across multiple tiles, the need to process a feature multiple times can be avoided

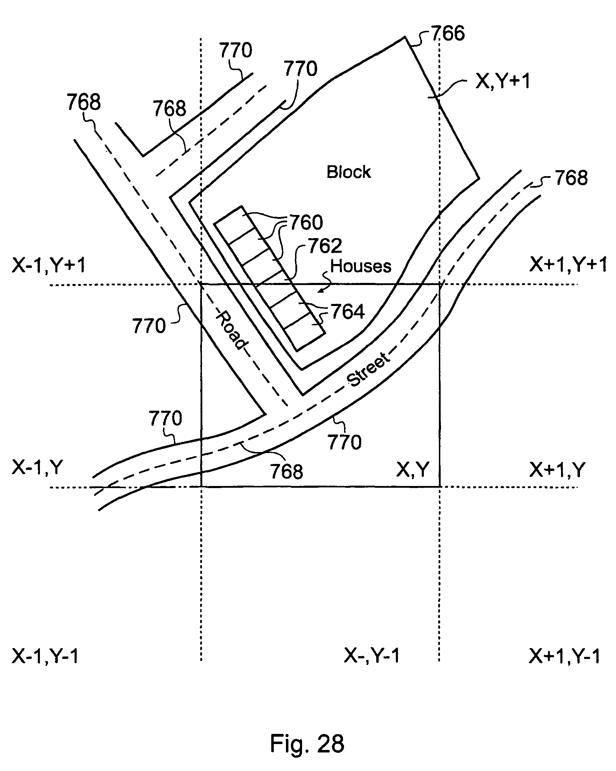

Figure 28 illustrates a number of tiles identified as (x-1,y-1), (x,y-1), (x+1, y-1), (x-1,y), (x,y), (x+1, y), (x-1,y+1), (x,y+1), (x+1, y+1) and illustrates some features may exist within one tile only (e.g., the representations of the houses 760 and 764) whereas others of the houses exist within multiple tiles, for example the representations of the house 762, and the representations of the area 766, of the boundaries 770 of the roads and the road centrelines 768.

As indicated above, various approaches to the downloading of the information relating to respective features and to the display thereof can be employed to take advantage of the fact that the features can exist within and/or extend across multiple tiles.

In the first instance, the fact that features extend across multiple tiles can enhance the perceived downloading rate to the user. Accordingly, rather than only displaying features within a tile, when information for a complete feature (say a large polygon) has been received, all of the polygon that is visible can be displayed, spanning multiple tiles.

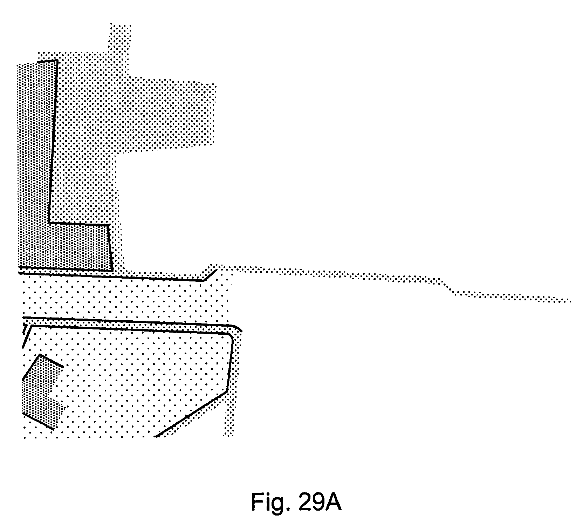

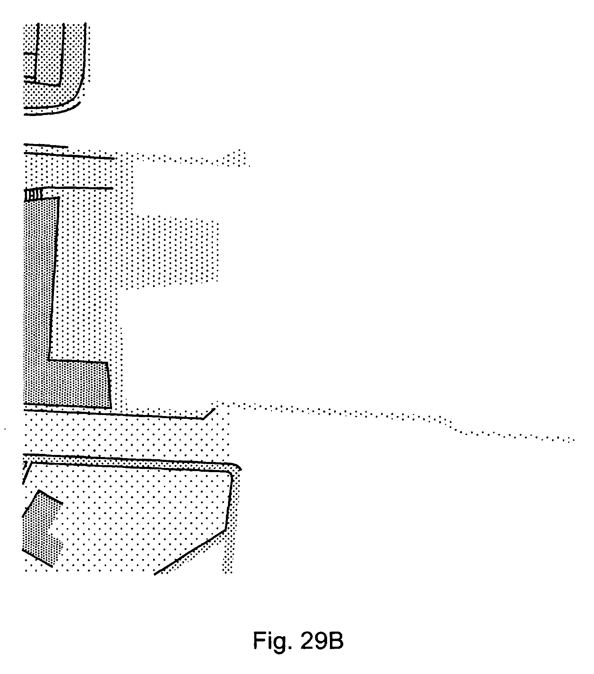

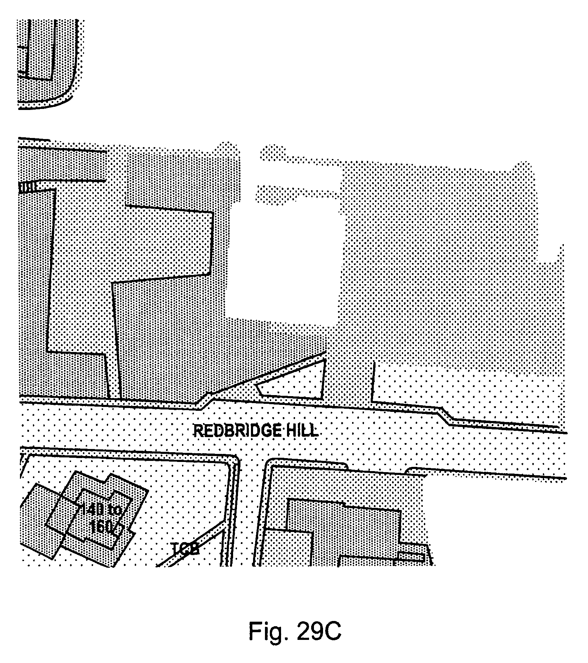

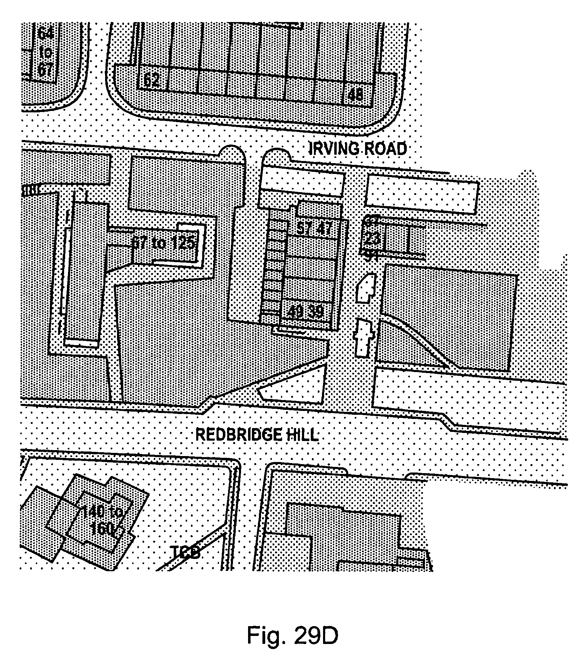

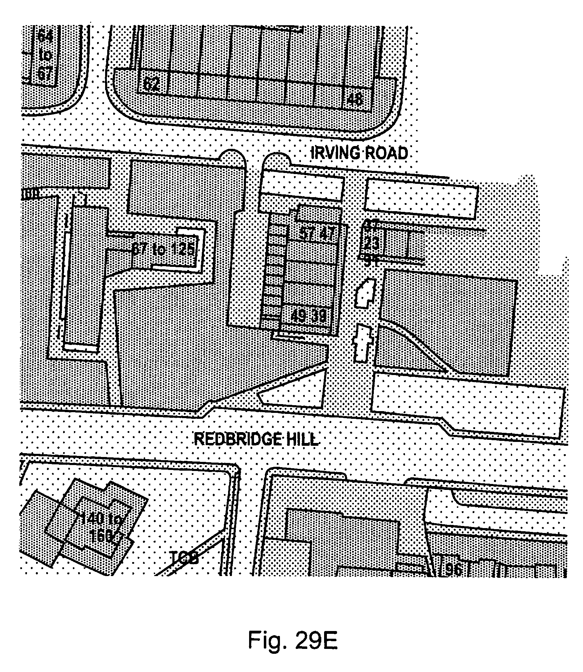

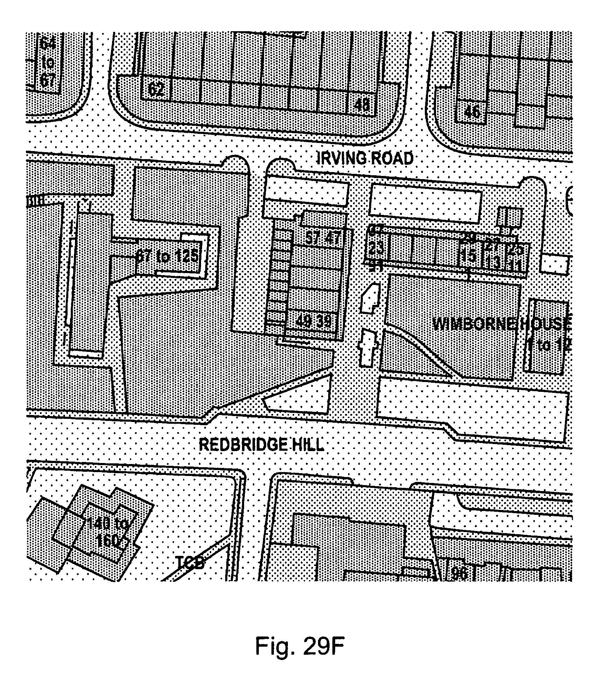

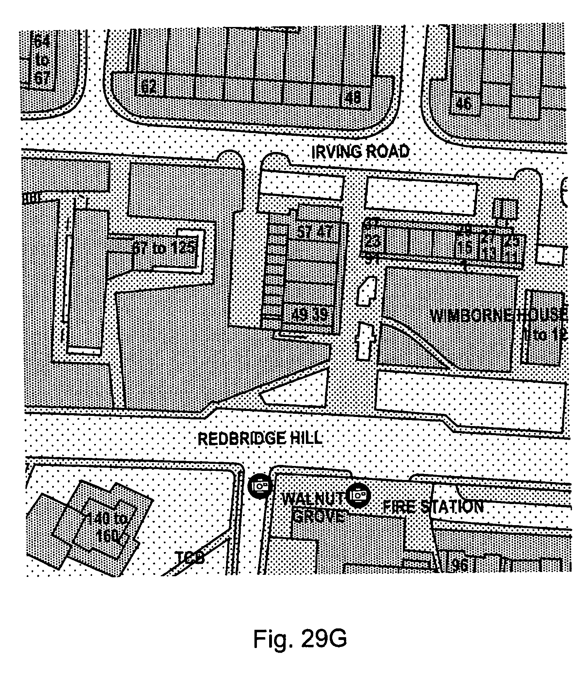

Figures 29A to 29G illustrate the successive display of features on a display of a client device. In the example shown in Figures 29A to 29G, the display of an array of 3 X 3 (=9) tiles is illustrated (as for Figure 28), with the tiles being downloaded and displayed starting with the bottom left tile. The tile information is downloaded and displayed in an order bottom left, mid left, top left, bottom middle, mid middle, top middle, bottom right, mid right and top right. It will be seen that in this example, larger features are displayed first, with smaller features being displayed later. By displaying larger features first, information that spans multiple tiles can be displayed, giving the user an overview of the mapped area, and then filing in the detail. Also it will be noted that the downloading and/or display of large features for a next tile can be started before the downloading and/or display of the remaining features for a previous tile, further to enhance the perceived rate of downloading of the tiles to the user.

As the client device holds in the primary cache a list of features already received and not discarded, this can be used to avoid downloading a duplicate of a feature, when that feature is already held by the client device. Thus, when the client device requires the downloading of features for a new tile, it is able to check there are any features already received that overlap with the new tile to be downloaded. The client device can be programmed to comparing the bounding box co-ordinates of each of the features already held in the primary cache to the boundary box co-ordinates of the new tile to be downloaded. The UID of a feature that is found to overlap the new tile is added to an exclusion list for the new tile. The client device is then operable to send a request for the new tile to the server. The tile request identifies the new tile and includes the exclusion list of feature UIDs that do not need to be resent. The server will then send all vectors in the requested tile, minus any that are on the excluded list. In this way any large polygons or lines that overlap multiple tiles will be transferred only once.

The client device uses the received information to update the data structure identified in Figure 27. In this manner, the client device effectively constructs a subset of the data structure of the complete mapping information held by the server. Maintaining a subset of this information corresponding to the mapping area to be displayed by the client device and surrounding areas facilitates the display of the information on the client device can be effected in an efficient manner.

In the case of a vector-based example of the invention, the data held in the primary cache 52 can comprise the relevant subset of the mapping data, for example using a data structure as represented in Figure 27 including tile entries and the feature entries for the tiles currently held by the client device.

In a vector-based example of the invention in which an exclusion list may be supplied from the client with a request for a new tile as described above, the secondary cache 54 is not used. This is because the data received for a tile at any time may not include all of the feature information that is to be displayed within the tile (because some of those features may already have been stored in the primary cache on receipt of data for a previous tile). As a result, the compressed data received for a given tile cannot be relied on as complete for the tile concerned. Accordingly, in such an example, the decision step 526 in Figure 17 will always be answered in the negative.

Alternatively, in a vector-based example of the invention in which a request for a new tile always requests all feature data for each tile (i.e., an exclusion list is not used), the secondary cache 54 can be used as the data received for a tile at any time includes all of the feature information to be displayed within the tile. Accordingly, the compressed data received for a given tile can be relied on as complete for the tile concerned. In such a case, the compressed data can be stored in the secondary cache and the decision 526 in Figure 17 could give a positive or negative result as appropriate.

With reference to Figure 18, steps 362 and 364 of sending a request to the server and obtaining a reply from the sever can involve a series of steps.

In step 362, when the client device requires the downloading of features for a new tile, it compares the bounding box co-ordinates of each of the features already held in the primary cache to the boundary box co-ordinates of the new tile to be downloaded. The client device is operable to compile an exclusion list for the new tile to include the UIDs of all features that overlap the new tile. The client device is then operable to send a request for the new tile to the server including the identification of the new tile and the exclusion list of feature UIDs that do not need to be resent.

In step 364, the server is then operable to compare the bounding box co-ordinates of all features that it holds to the bounding box co-ordinates of the new tile. When it identifies a feature that overlaps the new tile, it then checks the UID of that feature against the UIDs in the exclusion list. If there is a match between the UID of the identified feature and a UID in the exclusion list, then the feature is not resent. Otherwise, the identified feature is sent to the client device. In the present example the server compiles a set of features to be sent and sends these in one message or set of messages to the client device. However, in other examples, the features could be sent in separate messages. The data to be transmitted is compressed before being sent to the client device to reduce the transmission time. The received data can then be decompressed (decoded) in step 368 and the features can be stored in the primary cache 52 (Figure 5) in step 370. In an example where tile requests can include an exclusion list, the secondary cache is not used. Alternatively, in an example where the tile requests do not include an exclusion list, the compressed data can also be stored in the secondary cache 54 (Figure 5).

In a vector-based example of the invention tiles that are no longer used can be deleted, for example in step 388 of Figure 19. When a tile entry is deleted from the primary cache, an associated feature entry is only deleted if it is not used by any other tile entry currently held in the primary cache. As a feature is stored once and can be referred to by multiple tiles, it will only be deleted when no other tile entry identifies its UID. Accordingly, in step 388, when deleting a tile entry, the client device checks whether any other tile entry identifies a feature before deleting a feature associated with the tile entry to be deleted.

Although the embodiments above have been described in considerable detail, numerous variations and modifications will become apparent to those skilled in the art once the above disclosure is fully appreciated. It is intended that the following claims be interpreted to embrace all such variations and modifications.

For example, although in the particular example the invention relates to the display of map images, it will be appreciated that the present invention could be applied to the display of images other than maps.

Also, various alternatives and or enhancements are possible to reduce the time between the selection of an image by a user and the display of the image to the user, particularly where the available communication bandwidth is low.

For example, rather than downloading each tile in full detail, at least some of the tiles could be downloaded initially in lower detail.

Where references made to downloading each tile in full or lower detail, it is to be understood that, for example, in the context of mapping data, a low detailed image may include, for example, representations of major roads and major geographical features only, where as an image with full detail may include the full detail of the roads, geographical features, etc held for a particular map rendering. Where raster-scanned image data is used to generate the maps, one or more sets of raster image data could be provided with, for example, a first raster scanned image including only significant features, and a second raster scanned image containing all details for the map representation concerned. The use of the low detail raster scanned format will enable the more rapid download of image data, as this will enable a compression algorithm more effectively to compress the image, there being less data within the image. Where, in contrast the image data is stored in vector format, the lower detailed image data can relate to the selection of certain of the vector stored image features only, whereas the full detail or higher detail can include the selection of all of the vector stored image features.

Thus, for example, with reference to Figure 6, in one option tile T1 could be downloaded in full detail, with tiles T2-T9 being downloaded with a lower detail initially, and then subsequently updated with higher detail images. In this manner, given that the user has selected the centre of T1 as the point of interest, that portion of the map could be provided to the user in full detail, with the surrounding locations being provided more rapidly, but in lower detail initially. The detail of the surrounding tiles T2-T9 could then be supplied subsequently in high detail.

As a further option, the order of the supply of the tiles T2-T9 could be made directly responsive to the user navigating or scrolling, the cursor in a given direction on the display screen 22 using the pointing device 24. Thus, for example, if the user were to move the cursor towards the bottom of the screen, tile T8 could be supplied before any other tile that has not as yet been downloaded.

With reference to Figure 7, the tiles T10, T11 and T12 could initially be downloaded in lower detail and then be updated in higher detail. Indeed, as an enhancement to the process described with reference to Figure 7, when the tiles T1-T9 have initially been downloaded (as represented in Figure 7.1) it would be possible for the application to download a complete set of tiles surrounding tiles T1-T9 (i.e. on all four sides), at least initially, in lower detail as a background task, whereby in the event that the user were to scroll rapidly to one side, there tiles surrounding the initially selected set of nine tiles will already have been downloaded, at least in lower detailed form.

## Claims

1. A method of displaying part of an image field on a display at a client device, the method comprising the client device:
- responding to user selection at the client device of a location within the image field to request from a server over a network, a plurality of image tiles including a first image tile that represents a portion of the image field including the selected location and a plurality of further image tiles that represent portions of the image field surrounding the portion of the image field represented by the first tile;
- receiving from the server via the network, the plurality of requested image tiles; and
- displaying at least a part of the first image tile and the further image tiles on the display, wherein a total area of the first and further image tiles exceeds the area of the display.

2. The method of Claim 1, wherein each image tile is requested and received individually by the client device.

3. The method of Claim 1 or Claim 2, wherein the client device identifies each tile to be received.

4. The method of Claim 1, wherein the client device identifies the location within the image field to the server and in response thereto the client device receives from the server the first and further tiles.

5. The method of Claim 1, wherein an image is generated from vector data, the client device being operable to request vector data for forming an image tile from the server.

6. The method of any preceding Claim, wherein each image tile is displayed on the display as it becomes available.

7. The method of any preceding Claim, wherein the first image tile is received first.

8. The method of any preceding Claim, wherein the area of the first image tile is less than the area of the display.

9. The method of any preceding Claim, wherein the first image tile and eight surrounding image tiles are requested and received in response to user selection at the client device of the location within the image field.

10. The method of any preceding Claim, wherein at least selected image tiles are initially received in a lower detail, and are then updated to higher detail subsequently.

11. The method of Claim 10, wherein each image tile is initially received in lower detail, and is then updated to a higher detail subsequently.

12. The method of any preceding Claim, wherein, subsequent to receipt of the first image tile and the plurality of further image tiles, additional image tiles are requested and received, the additional image tiles portions surrounding the first and further image tiles.

13. The method of Claim 12, wherein the additional image tiles are each received at least initially in lower detail.

14. The method of any preceding Claim, wherein, in response to user input at the client device requesting navigation in a selected direction with respect to displayed portion of the image field, the client device is operable to request from the server, additional image tiles in the selected direction with respect to the received image tiles.

15. The method of Claim 14, wherein the user device is operable to display a pointer on the display and includes a navigation input control for controlling the position of the pointer, the method further including the client device responding to the cursor reaching a boundary zone of the display as a request for navigation in a direction represented by that boundary zone.

16. The method of any preceding Claim, wherein the client device is operable to hold received image tiles in a cache in the client device.

17. The method of Claim 16, wherein memory capacity constraints dictate that an cached image tile has to be discarded to make way for a newly received image tile, the image tile representative of an image portion furthest from the currently displayed portion of the image field is discarded.

18. The method of Claim 16 or Claim 17, wherein the client device is operable to hold decompressed image tiles in a first cache in the client device and to hold compressed image tiles in a second cache in the client device.

19. The method of any preceding Claim, wherein the image field is a map, and the image tiles are representative of respective portions of the map.

20. The method of Claim 19, wherein the map is defined in at least a first predefined scale, and the image tiles are derived from the map at a selected scale.

21. The method of Claim 20, wherein the selected scale is selectable by the user.

22. The method of Claim 20 or Claim 21, wherein, subsequent to receipt of the first and further image tiles at the selected scale, a set of one or more image tiles are received at a different scale, the set of one or more image tiles at a different scale being cached in the client device.

23. The method of any preceding Claim, wherein information relating to objects represented by parts of the image tiles are associated with the image tiles and wherein, in response to user selection of an object on the display, the information relating to the object is supplied to the user.

24. The method of Claim 23, wherein supplying the information comprises providing information that was cached with the image tile at the client device.

25. The method of Claim 24, wherein supplying the information comprises requesting the information from the server via the network.

26. The method of any preceding Claim, wherein the user selection of a location is by selection of a location in a list of displayed favourites.

27. The method of any preceding Claim, comprising adding a location to a list of favourites.

28. The method of any preceding Claim, wherein in response to a user entering an indication of a location at the client device, the client device is operable to request from a the server, a selection of candidate locations matching the indication, and then in response to user selection of one of the candidate locations a selected location request from a server over a network, the plurality of image tiles.

29. The method of any preceding Claim, wherein the client device is a mobile telephone.

30. A method of supplying a part of an image field to a display at a client device, the method comprising a server:
- receiving one or more requests from a client device via a network; and
- in response thereto supplying a plurality of image tiles representative of respective portions of the image field and including a first image tile representing a portion at the centre of the image to be displayed on the display and a plurality of further image tiles representing portions surrounding the first image tile, whereby the total area of the image tiles exceeds the area of the display at the client device.

31. The method of Claim 30, wherein each request is for a single image tile.

32. The method of Claim 30, wherein a request is for the plurality of image tiles.

33. The method of Claim 30, wherein a request is for vector data for forming an image tile.

34. The method of any of Claims 30 to 33, wherein the first image tile is sent first.

35. The method of any of Claims 30 to 34, wherein the area of the first image tile is less than the area of the display.

36. The method of any of Claims 30 to 35, wherein at least selected image tiles are initially sent in lower detail, and are then updated to higher detail.

37. The method of Claim 36, wherein each image tile is initially sent in lower detail, and is then updated to higher detail.

38. The method of any of Claims 30 to 37, wherein, subsequent to sending the first image tile and the plurality of further image tiles, additional image tiles are sent representing portions surrounding the first and plurality of further tiles.

39. The method of Claim 38, wherein the additional image tiles are each sent at least initially in low detail.

40. The method of any of Claims 30 to 39, wherein, in response to a request for additional image tiles in a selected direction with respect to the displayed image, sending the requested additional image tiles.

41. The method of any of Claims 30 to 40, wherein the image field is a map, and the image tiles are representative of respective portions of the map.

42. The method of Claim 41, wherein the map is defined in at least a first predefined scale, and the image tiles are derived from the map at a selected scale.

43. The method of Claim 42, wherein a request for image tiles includes an indication of a selected scale.

44. The method of Claim 42 or Claim 43, wherein, subsequent to sending the first and further image tiles at the selected scale, a set of one or more image tiles are sent at a different scale.

45. The method of any of Claims 30 to 44, comprising supplying information relating to objects represented by parts of the image tiles with the image tiles.

46. The method of any of Claims 30 to 45, comprising supplying information relating to objects represented by parts of the image tiles in response to a request for such information from the client device.

47. A computer program comprising program instructions operable to cause a client device to perform the steps of the method of any of claims 1 to 29.

48. A computer program comprising program instructions operable to cause a server to perform the steps of the method of any of claims 30 to 46.

49. The computer program of claim 47 or claim 48 on a carrier medium.

50. A client device comprising a processor, memory, a communication interface and a display, the client device comprising means for performing the steps of the method of any one of claims 1 to 29.

51. The client device of claim 50 comprising a computer program according to claim 47 to perform the steps of the method of any one of claims 1 to 29.

52. The client device of claim 50 or claim 51, comprising a cache for holding received image tile data.

53. The client device of claim 52, comprising a first cache for holding image tiles for display and a second cache for holding image tile data for generating the image tiles for display.

54. The client device of any of claims 50 to 53, wherein the client device is a mobile telephone.

55. A server comprising a processor, memory and a communications interface, the server comprising means for performing the steps of the method of any one of claims 30 to 46.

56. The server of claim 55 comprising a computer program according to claim 48 to perform the steps of the method of any one of claims 30 to 46.
